# EUROPEAN PATENT APPLICATION

(11) **EP 4 786 260 A1**
(43) Date of publication of application: **05.08.2026**
(21) Application number: 24869755.9
(22) Date of filing: 17.05.2024
(51) Int. Cl.: B60L 53/302, B60L 58/26, B60L 53/16, B60L 53/31

(54) **ONBOARD CHARGING CONNECTION APPARATUS, ELECTRIC VEHICLE, LIQUID COOLING DEVICE, AND CHARGING PILE**

(30) Priority: 30.09.2023 CN 202311295630
(71) Applicant: Huawei Digital Power Technologies Co., Ltd., Shenzhen, Guangdong 518043 (CN)
(72) Inventor: CHENG, Dong, Shenzhen, Guangdong 518043 (CN); LIN, Quanxi, Shenzhen, Guangdong 518043 (CN); HU, Minggui, Shenzhen, Guangdong 518043 (CN)
(74) Representative: Maiwald GmbH
(86) International application number: PCT/CN2024/093964
(87) International publication number: WO 2025/066189

(57) **Abstract**

This application provides a vehicle-mounted charging connection apparatus, an electric vehicle, a charging connector, and a charging pile. The vehicle-mounted charging connection apparatus includes a vehicle socket and a connection confirm circuit. The vehicle socket includes a direct current socket, a liquid cooling socket, and a connection confirm socket. The vehicle-mounted charging connection apparatus is configured to determine, by using the connection confirm circuit, a status of connection between the direct current socket and a direct current plug, and a status of connection between the liquid cooling socket and a liquid cooling plug. When the liquid cooling socket is successfully connected to the liquid cooling plug and the direct current socket is successfully connected to the direct current plug, the direct current socket is configured to receive a direct current to charge a power battery. This application can resolve a heat dissipation problem during charging of the power battery, and increase a charging power provided by the charging apparatus for the power battery.

## Description

This application claims priority to Chinese Patent Application No. 202311295630.1, filed with the China National Intellectual Property Administration on September 30, 2023, and entitled "VEHICLE-MOUNTED CHARGING CONNECTION APPARATUS, ELECTRIC VEHICLE, LIQUID COOLING DEVICE, AND CHARGING PILE", which is incorporated herein by reference in its entirety.

### TECHNICAL FIELD

This application relates to the field of new-energy vehicles, and in particular, to a vehicle-mounted charging connection apparatus, an electric vehicle, a liquid cooling device, and a charging pile.

### BACKGROUND

With a breakthrough in high-power charging technologies for batteries, the battery can be fully charged within a short period of time. However, in current actual application, when a charging apparatus charges a power battery at a high power, heat generated by the power battery greatly increases accordingly. If the heat cannot be eliminated in time, normally charging the power battery by the charging apparatus at the high power is affected.

The electric vehicle usually has a thermal management system that can provide cold required for heat dissipation of the power battery. However, as a charging power increases, for example, in an ultra-fast charging scenario, the power battery generates more heat, effect of heat dissipation only via the thermal management system is limited, and a heat dissipation capability of the thermal management system cannot meet a heat dissipation requirement of the power battery during high-power charging.

### SUMMARY

This application provides a vehicle-mounted charging connection apparatus, an electric vehicle, a charging connector, and a charging pile. When a charging apparatus charges a power battery of the electric vehicle at a high power, a liquid cooling device may transmit a coolant to a thermal management system of the power battery. Therefore, a heat dissipation problem during charging of the power battery can be resolved, and a charging power provided by the charging apparatus for the power battery can be increased.

According to a first aspect, a vehicle-mounted charging connection apparatus used in an electric vehicle is provided. The vehicle-mounted charging connection apparatus includes a vehicle socket and a connection confirm circuit. The vehicle socket includes a direct current socket, a liquid cooling socket, and a connection confirm socket. One end of the direct current socket is configured to connect to a direct current plug of a charging connector, and the other end of the direct current socket is connected to a power battery of the electric vehicle. One end of the liquid cooling socket is configured to connect to a liquid cooling plug of the charging connector, and the other end of the liquid cooling socket is connected to a thermal management system of the power battery through a liquid cooling pipeline. The liquid cooling socket is configured to receive a coolant output by the liquid cooling plug, or the liquid cooling socket is configured to output a coolant to the liquid cooling plug. One end of the connection confirm socket is configured to connect to a connection confirm plug of the charging connector, and the other end of the connection confirm socket is connected to the connection confirm circuit. The vehicle-mounted charging connection apparatus is configured to determine, by using the connection confirm circuit, a status of connection between the direct current socket and the direct current plug, and a status of connection between the liquid cooling socket and the liquid cooling plug. When the liquid cooling socket is successfully connected to the liquid cooling plug and the direct current socket is successfully connected to the direct current plug, the direct current socket is configured to receive a direct current to charge the power battery.

The vehicle socket in this embodiment of this application includes the connection confirm socket. Because the connection confirm socket is connected to the connection confirm circuit, the vehicle-mounted charging connection apparatus may determine the status of connection between the liquid cooling socket and the liquid cooling plug based on a voltage at a detection point in the connection confirm circuit. In addition, when the liquid cooling socket is successfully connected to the liquid cooling plug and a charging pile charges the power battery at a high power, a liquid cooling system injects a cooling medium into the power battery to cool the power battery, to resolve a heat dissipation problem during charging of the power battery, thereby increasing a charging power provided by a charging apparatus for the power battery. In addition, the liquid cooling socket and the charging socket in this application are integrated into one interface. Correspondingly, the charging pile needs to be configured with only one charging connector, and a user needs to insert the charging connector only once to implement a cooling function when the charging pile charges the power battery, thereby improving user experience.

With reference to the first aspect, in a possible design, when the liquid cooling socket is connected to the liquid cooling plug and the direct current socket is connected to the direct current plug, the connection confirm circuit and a connection confirm circuit of the charging pile form a current loop by using the connection confirm socket and the connection confirm plug. The vehicle-mounted charging connection apparatus is configured to determine the status of connection between the liquid cooling socket and the liquid cooling plug and the status of connection between the direct current socket and the direct current plug based on the voltage at the detection point in the connection confirm circuit. In response to the voltage at the detection point reaching a preset value, the vehicle-mounted charging connection apparatus determines that the liquid cooling socket is successfully connected to the liquid cooling plug and the direct current socket is successfully connected to the direct current plug.

In this embodiment of this application, the vehicle-mounted charging connection apparatus may determine the status of connection between the liquid cooling socket and the liquid cooling plug and the status of connection between the direct current socket and the direct current plug based on the voltage at the detection point. In addition, when the liquid cooling socket is successfully connected to the liquid cooling plug, the direct current socket is successfully connected to the direct current plug, and the charging pile charges the power battery at a high power, the liquid cooling system may cool the power battery by injecting the cooling medium into the power battery, to meet a heat dissipation requirement of the power battery during charging at the high power. This helps improve the charging power of the power battery and shortens charging duration of the electric vehicle.

With reference to the first aspect, in a possible design, in response to the liquid cooling socket being successfully connected to the liquid cooling plug and the direct current socket being successfully connected to the direct current plug, the vehicle-mounted charging connection apparatus is configured to send a packet indicating that the liquid cooling socket is successfully connected to the liquid cooling plug and that the direct current socket is successfully connected to the direct current plug.

In this embodiment of this application, the vehicle-mounted charging connection apparatus may send, to the charging pile, the packet indicating that the liquid cooling socket is successfully connected to the liquid cooling plug and that the direct current socket is successfully connected to the direct current plug. The charging pile does not need to determine the status of connection between the liquid cooling plug and the liquid cooling socket based on the voltage at the detection point in the connection confirm circuit, thereby improving determining efficiency.

With reference to the first aspect, in a possible design, the connection confirm socket includes a first connection confirm socket, a second connection confirm socket, and a third connection confirm socket, the connection confirm circuit includes a first connection confirm circuit, a second connection confirm circuit, and a third connection confirm circuit, and the first connection confirm socket, the second connection confirm socket, and the third connection confirm socket are respectively connected to the first connection confirm circuit, the second connection confirm circuit, and the third connection confirm circuit. The vehicle-mounted charging connection apparatus is configured to determine the status of connection between the direct current socket and the direct current plug by using the first connection confirm circuit or the second connection confirm circuit. The vehicle-mounted charging connection apparatus is configured to determine the status of connection between the liquid cooling socket and the liquid cooling plug by using the third connection confirm circuit.

In this embodiment of this application, the vehicle-mounted charging connection apparatus determines the status of connection between the direct current socket and the direct current plug by using the first connection confirm circuit or the second connection confirm circuit, determines the status of connection between the liquid cooling socket and the liquid cooling plug by using the third connection confirm circuit, and may respectively determine the status of connection between the direct current socket and the direct current plug and the status of connection between the liquid cooling socket and the liquid cooling plug by using different connection confirm circuits, to improve accuracy of determining the connection statuses.

With reference to the first aspect, in a possible design, the first connection confirm circuit includes a first resistor unit, and the first connection confirm socket is connected to a voltage source through the first resistor unit.

With reference to the first aspect, in a possible design, the vehicle-mounted charging connection apparatus is configured to detect a voltage at a detection point between the first resistor unit and the first connection confirm socket, to determine the status of connection between the direct current socket and the direct current plug. In response to the voltage at the detection point between the first resistor unit and the first connection confirm socket reaching a first vehicle-end preset value, the vehicle-mounted charging connection apparatus is configured to determine that the direct current socket is successfully connected to the direct current plug.

In this embodiment of this application, because the detection point set in this application is connected to the voltage source in the electric vehicle, when the voltage at the detection point is a voltage output by the voltage source, the vehicle-mounted charging connection apparatus identifies that the direct current socket is not connected to the direct current plug. When the voltage at the detection point reaches the first vehicle-end preset value, the vehicle-mounted charging connection apparatus identifies that the direct current socket is connected to the direct current plug. The status of connection between the direct current socket and the direct current plug is identified based on the voltage at the detection point, to improve accuracy of identifying the status of connection between the direct current socket and the direct current plug by the vehicle-mounted charging connection apparatus. This facilitates normal charging of the power battery.

With reference to the first aspect, in a possible design, the vehicle socket further includes a ground socket. One end of the ground socket is configured to connect to a ground plug of the charging connector, and the other end of the ground socket is connected to a vehicle body ground platform. The second connection confirm circuit includes a second resistor unit. The second connection confirm socket is connected to the vehicle body ground platform through the second resistor unit.

With reference to the first aspect, in a possible design, the vehicle-mounted charging connection apparatus is further configured to detect a voltage at a detection point between the second resistor unit and the second connection confirm socket, to determine the status of connection between the direct current socket and the direct current plug. In response to the voltage at the detection point between the first resistor unit and the first connection confirm socket reaching the first vehicle-end preset value and the voltage at the detection point between the second resistor unit and the second connection confirm socket reaching a second vehicle-end preset value, the vehicle-mounted charging connection apparatus is configured to determine that the direct current socket is successfully connected to the direct current plug.

In this embodiment of this application, the status of connection between the direct current socket and the direct current plug is identified based on the voltages at the two detection points, to further improve accuracy of identifying the status of connection between the direct current socket and the direct current plug by the vehicle-mounted charging connection apparatus. This facilitates normal charging of the power battery.

With reference to the first aspect, in a possible design, the third connection confirm circuit includes a third resistor unit, and the third connection confirm socket is connected to a voltage source through the third resistor unit.

With reference to the first aspect, in a possible design, the vehicle-mounted charging connection apparatus is configured to detect a voltage at a detection point between the third resistor unit and the third connection confirm socket, to determine the status of connection between the liquid cooling socket and the liquid cooling plug. In response to the voltage at the detection point between the third resistor unit and the third connection confirm socket reaching a third vehicle-end preset value, the vehicle-mounted charging connection apparatus is configured to determine that the liquid cooling socket is successfully connected to the liquid cooling plug.

In this embodiment of this application, because the detection point set in this application is connected to the voltage source in the electric vehicle, when the voltage at the detection point is the voltage output by the voltage source, the vehicle-mounted charging connection apparatus identifies that the liquid cooling socket is not connected to the liquid cooling plug. When the voltage at the detection point reaches the third vehicle-end preset value, the vehicle-mounted charging connection apparatus identifies that the liquid cooling socket is connected to the liquid cooling plug. The status of connection between the liquid cooling socket and the liquid cooling plug is identified based on the voltage at the detection point, to improve accuracy of identifying the status of connection between the liquid cooling socket and the liquid cooling plug by the vehicle-mounted charging connection apparatus. This helps the liquid cooling device transmit the cooling medium in the liquid cooling system to the power battery, to cool the power battery.

With reference to the first aspect, in a possible design, the vehicle socket includes a plug/unplug end, the plug/unplug end is configured to implement plugging/unplugging with the charging connector, and a distance between the third connection confirm socket and the plug/unplug end is greater than a distance between a liquid inlet/outlet of the liquid cooling socket and the plug/unplug end.

In this embodiment of this application, the distance between the third connection confirm socket and the plug/unplug end is greater than or equal to the distance between the liquid inlet/outlet of the liquid cooling socket and the plug/unplug end. In other words, the liquid inlet/outlet of the liquid cooling socket and the liquid inlet/outlet of the liquid cooling plug are first connected, and the third connection confirm socket and the third connection confirm plug are then connected, to avoid a liquid leakage case.

With reference to the first aspect, in a possible design, the distance between the third connection confirm socket and the plug/unplug end is less than or equal to a distance between the second connection confirm socket and the plug/unplug end.

In this embodiment of this application, the distance between the third connection confirm socket and the plug/unplug end is less than or equal to the distance between the second connection confirm socket and the plug/unplug end. This is equivalent to a case in which the charging pile performs final full connection confirm. In this design, an existing contact coupling sequence of the vehicle socket and the vehicle plug in a connection process may be used, and an existing protocol does not need to be changed, provided that coupling of the liquid inlet/outlet and coupling of the third connection confirm socket and the third connection confirm plug are added. The implementation is relatively simple.

With reference to the first aspect, in a possible design, the electric vehicle includes a traction apparatus. The traction apparatus is configured to draw the charging connector to move, so that the vehicle socket is fully connected to the charging connector. The distance between the third connection confirm socket and the plug/unplug end is equal to the distance between the second connection confirm socket and the plug/unplug end, the distance between the liquid inlet/outlet of the liquid cooling socket and the plug/unplug end is less than the distance between the third connection confirm socket and the plug/unplug end, and the distance between the liquid inlet/outlet of the liquid cooling socket and the plug/unplug end is greater than or equal to a distance between the first connection confirm socket and the plug/unplug end.

In this embodiment of this application, when a contact of the first connection confirm socket is connected to a contact of the first connection confirm plug, it indicates that the vehicle socket and the charging connector are in a semi-connected state. The traction apparatus may draw the charging connector to move, so that the charging connector is close to the vehicle socket. Finally, the charging connector and the vehicle socket are in a fully connected state. A user does not need to manually push the liquid cooling connector, thereby improving user experience. In addition, the distance between the third connection confirm socket and the plug/unplug end is equal to the distance between the second connection confirm socket and the plug/unplug end. This helps the charging pile transmit the liquid cooling medium to the thermal management system of the power battery in time and can further avoid a misjudgment of the charging pile.

With reference to the first aspect, in a possible design, the vehicle socket further includes a communication socket. One end of the communication socket is configured to connect to the charging connector, and the other end of the communication socket is connected to a vehicle controller of the electric vehicle.

With reference to the first aspect, in a possible design, the vehicle socket further includes an auxiliary power socket. One end of the auxiliary power socket is configured to connect to an auxiliary power plug of the charging connector, and the other end of the auxiliary power socket is configured to receive a direct current.

With reference to the first aspect, in a possible design, the direct current socket is connected to the power battery through two charging loop contactors.

With reference to the first aspect, in a possible design, the vehicle-mounted charging connection apparatus is configured to: when the liquid cooling socket is successfully connected to the liquid cooling plug and the direct current socket is successfully connected to the direct current plug, send, to the charging pile, a packet that is used to request the charging pile to output a first charging power; or when the direct current socket is successfully connected to the direct current plug, send, to the charging pile, a packet that is used to request the charging pile to output a second charging power, where the second charging power is less than the first charging power.

In this embodiment of this application, the vehicle-mounted charging connection apparatus may selectively send, to the charging pile based on the status of connection between the liquid cooling socket and the liquid cooling plug, a packet for requesting the charging pile to output different charging powers, to meet the heat dissipation requirement of charging the power battery based on different charging powers.

According to a second aspect, an electric vehicle is provided, including a vehicle-mounted charging connection apparatus, a power battery, and a thermal management system of the power battery. The thermal management system is configured to dissipate heat for the power battery. The vehicle-mounted charging connection apparatus includes a vehicle socket and a connection confirm circuit. The vehicle socket includes a direct current socket, a liquid cooling socket, and a connection confirm socket. One end of the direct current socket is configured to connect to a direct current plug of a charging connector, and the other end of the direct current socket is connected to the power battery. One end of the liquid cooling socket is configured to connect to a liquid cooling plug of the charging connector, and the other end of the liquid cooling socket is connected to a thermal management system through a liquid cooling pipeline. The liquid cooling socket is configured to receive a coolant output by the liquid cooling plug, or the liquid cooling socket is configured to output a coolant to the liquid cooling plug. One end of the connection confirm socket is configured to connect to a connection confirm plug of the charging connector, and the other end of the connection confirm socket is connected to the connection confirm circuit. The electric vehicle is configured to determine, by using the connection confirm circuit, a status of connection between the direct current socket and the direct current plug, and a status of connection between the liquid cooling socket and the liquid cooling plug. When the liquid cooling socket is successfully connected to the liquid cooling plug and the direct current socket is successfully connected to the direct current plug, the direct current socket is configured to receive a direct current to charge the power battery.

With reference to the second aspect, in a possible design, when the liquid cooling socket is connected to the liquid cooling plug and the direct current socket is connected to the direct current plug, the connection confirm circuit and a connection confirm circuit of the charging pile form a current loop by using the connection confirm socket and the connection confirm plug. The electric vehicle is configured to determine the status of connection between the liquid cooling socket and the liquid cooling plug and the status of connection between the direct current socket and the direct current plug based on the voltage at the detection point in the connection confirm circuit. In response to the voltage at the detection point reaching a preset value, the electric vehicle is configured to determine that the liquid cooling socket is successfully connected to the liquid cooling plug and the direct current socket is successfully connected to the direct current plug.

With reference to the second aspect, in a possible design, in response to the liquid cooling socket being successfully connected to the liquid cooling plug and the direct current socket being successfully connected to the direct current plug, the electric vehicle is configured to send a packet indicating that the liquid cooling socket is successfully connected to the liquid cooling plug and that the direct current socket is successfully connected to the direct current plug.

With reference to the second aspect, in a possible design, the connection confirm socket includes a first connection confirm socket, a second connection confirm socket, and a third connection confirm socket, the connection confirm circuit includes a first connection confirm circuit, a second connection confirm circuit, and a third connection confirm circuit, and the first connection confirm socket, the second connection confirm socket, and the third connection confirm socket are respectively connected to the first connection confirm circuit, the second connection confirm circuit, and the third connection confirm circuit. The electric vehicle is configured to determine the status of connection between the direct current socket and the direct current plug by using the first connection confirm circuit or the second connection confirm circuit. The electric vehicle is configured to determine the status of connection between the liquid cooling socket and the liquid cooling plug by using the third connection confirm circuit.

With reference to the second aspect, in a possible design, the first connection confirm circuit includes a first resistor unit, and the first connection confirm socket is connected to a voltage source through the first resistor unit.

With reference to the second aspect, in a possible design, the electric vehicle is configured to detect a voltage at a detection point between the first resistor unit and the first connection confirm socket, to determine the status of connection between the direct current socket and the direct current plug. In response to the voltage at the detection point between the first resistor unit and the first connection confirm socket reaching a first vehicle-end preset value, the electric vehicle is configured to determine that the direct current socket is successfully connected to the direct current plug.

With reference to the second aspect, in a possible design, the vehicle socket further includes a ground socket. One end of the ground socket is configured to connect to a ground plug of the charging connector, and the other end of the ground socket is connected to a vehicle body ground platform. The second connection confirm circuit includes a second resistor unit. The second connection confirm socket is connected to the vehicle body ground platform through the second resistor unit.

With reference to the second aspect, in a possible design, the electric vehicle is further configured to detect a voltage at a detection point between the second resistor unit and the second connection confirm socket, to determine the status of connection between the direct current socket and the direct current plug. In response to the voltage at the detection point between the first resistor unit and the first connection confirm socket reaching the first vehicle-end preset value and the voltage at the detection point between the second resistor unit and the second connection confirm socket reaching a second vehicle-end preset value, the electric vehicle is configured to determine that the direct current socket is successfully connected to the direct current plug.

With reference to the second aspect, in a possible design, the third connection confirm circuit includes a third resistor unit, and the third connection confirm socket is connected to a voltage source through the third resistor unit.

With reference to the second aspect, in a possible design, the electric vehicle is configured to detect a voltage at a detection point between the third resistor unit and the third connection confirm socket, to determine the status of connection between the liquid cooling socket and the liquid cooling plug. In response to the voltage at the detection point between the third resistor unit and the third connection confirm socket reaching a third vehicle-end preset value, the electric vehicle is configured to determine that the liquid cooling socket is successfully connected to the liquid cooling plug.

With reference to the second aspect, in a possible design, the vehicle socket includes a plug/unplug end, the plug/unplug end is configured to implement plugging/unplugging with the charging connector, and a distance between the third connection confirm socket and the plug/unplug end is greater than a distance between a liquid inlet/outlet of the liquid cooling socket and the plug/unplug end.

With reference to the second aspect, in a possible design, the distance between the third connection confirm socket and the plug/unplug end is less than or equal to a distance between the second connection confirm socket and the plug/unplug end.

With reference to the second aspect, in a possible design, the electric vehicle includes a traction apparatus. The traction apparatus is configured to draw the charging connector to move, so that the vehicle socket is fully connected to the charging connector. The distance between the third connection confirm socket and the plug/unplug end is equal to the distance between the second connection confirm socket and the plug/unplug end, the distance between the liquid inlet/outlet of the liquid cooling socket and the plug/unplug end is less than the distance between the third connection confirm socket and the plug/unplug end, and the distance between the liquid inlet/outlet of the liquid cooling socket and the plug/unplug end is greater than or equal to a distance between the first connection confirm socket and the plug/unplug end.

With reference to the second aspect, in a possible design, the vehicle socket further includes a communication socket. One end of the communication socket is configured to connect to a charging connector, and the other end of the communication socket is connected to a vehicle controller of the electric vehicle.

With reference to the second aspect, in a possible design, the vehicle socket further includes an auxiliary power socket. One end of the auxiliary power socket is configured to connect to an auxiliary power plug of the charging connector, and the other end of the auxiliary power socket is configured to receive a direct current.

With reference to the second aspect, in a possible design, the direct current socket is connected to the power battery through two charging loop contactors.

With reference to the second aspect, in a possible design, the electric vehicle is configured to: when the liquid cooling socket is successfully connected to the liquid cooling plug and the direct current socket is successfully connected to the direct current plug, send, to the charging pile, a packet that is used to request the charging pile to output a first charging power; or when the direct current socket is successfully connected to the direct current plug, send, to the charging pile, a packet that is used to request the charging pile to output a second charging power, where the second charging power is less than the first charging power.

For beneficial effects of the second aspect, refer to the beneficial effects of the first aspect. Details are not described again.

According to a third aspect, a charging connector used in a charging pile is provided. The charging connector includes a charging plug and a connection confirm circuit. The charging plug includes a direct current plug, a liquid cooling plug, and a connection confirm plug. One end of the direct current plug is configured to connect to a direct current socket of an electric vehicle, and the other end of the direct current plug is configured to connect to a power conversion apparatus of the charging pile. One end of the liquid cooling plug is configured to connect to a liquid cooling socket of the electric vehicle, and the other end of the liquid cooling plug is configured to connect to a liquid cooling device of the charging pile. The liquid cooling plug is configured to receive a coolant output by the liquid cooling device. One end of the connection confirm plug is configured to connect to a connection confirm socket of the electric vehicle, and the other end of the connection confirm plug is configured to connect to the connection confirm circuit.

With reference to the third aspect, in a possible design, when the liquid cooling plug is connected to the liquid cooling socket, and the direct current plug is connected to the direct current socket, the connection confirm circuit and a connection confirm circuit of the electric vehicle form a current loop by using the connection confirm plug and the connection confirm socket. The charging pile connected to the charging connector is configured to detect a voltage at a detection point in the connection confirm circuit to determine a status of connection between the direct current plug and the direct current socket.

With reference to the third aspect, in a possible design, the connection confirm plug includes a first connection confirm plug, a second connection confirm plug, and a third connection confirm plug, the connection confirm circuit includes a first connection confirm circuit, a second connection confirm circuit, and a third connection confirm circuit, and the first connection confirm plug, the second connection confirm plug, and the third connection confirm plug are respectively connected to the first connection confirm circuit, the second connection confirm circuit, and the third connection confirm circuit. The first connection confirm circuit includes a fourth resistor unit. The first connection confirm plug is connected to a device ground platform of the charging pile through the fourth resistor unit. The second connection confirm circuit includes a fifth resistor unit. The second connection confirm plug is connected to a voltage source through the fifth resistor unit. The detection point is located between the fourth resistor unit and the second connection confirm plug. The third connection confirm circuit includes a sixth resistor unit. The third connection confirm plug is connected to the device ground platform through the sixth resistor unit.

With reference to the third aspect, in a possible design, the second connection confirm circuit further includes a normally closed switch, and the normally closed switch is located between the fifth resistor unit and the second connection confirm plug.

With reference to the third aspect, in a possible design, the detection point includes a detection point located between the fifth resistor unit and the normally closed switch and a detection point located between the normally closed switch and the second connection confirm plug.

With reference to the third aspect, in a possible design, the charging plug includes a plug/unplug end, the plug/unplug end is configured to implement plugging/unplugging with a vehicle socket, and a distance between the third connection confirm plug and the plug/unplug end is greater than a distance between a liquid inlet/outlet of the liquid cooling plug and the plug/unplug end.

In this embodiment of this application, the distance between the third connection confirm plug and the plug/unplug end is greater than or equal to the distance between the liquid inlet/outlet of the liquid cooling plug and the plug/unplug end. In other words, the liquid inlet/outlet of the liquid cooling socket and the liquid inlet/outlet of the liquid cooling plug are first connected, and the third connection confirm socket and the third connection confirm plug are then connected, to avoid a liquid leakage case.

With reference to the third aspect, in a possible design, the distance between the third connection confirm plug and the plug/unplug end is less than or equal to a distance between the second connection confirm plug and the plug/unplug end.

In this embodiment of this application, the distance between the third connection confirm plug and the plug/unplug end is less than or equal to the distance between the second connection confirm plug and the plug/unplug end. This is equivalent to a case in which the charging pile performs final full connection confirm. In this design, an existing contact coupling sequence of the vehicle socket and the vehicle plug in a connection process may be used, and an existing protocol does not need to be changed, provided that coupling of the liquid inlet/outlet and coupling of the third connection confirm socket and the third connection confirm plug are added. The implementation is relatively simple.

With reference to the third aspect, in a possible design, the distance between the third connection confirm plug and the plug/unplug end is equal to the distance between the second connection confirm plug and the plug/unplug end, the distance between the liquid inlet/outlet of the liquid cooling plug and the plug/unplug end is less than the distance between the third connection confirm plug and the plug/unplug end, and the distance between the liquid inlet/outlet of the liquid cooling plug and the plug/unplug end is greater than or equal to a distance between the first connection confirm plug and the plug/unplug end.

In this embodiment of this application, when a contact of the first connection confirm socket is connected to a contact of the first connection confirm plug, it indicates that the vehicle socket and the charging connector are in a semi-connected state. The traction apparatus may draw the charging connector to move, so that the charging connector is close to the vehicle socket. Finally, the charging connector and the vehicle socket are in a fully connected state. A user does not need to manually push the liquid cooling connector, thereby improving user experience. In addition, the distance between the third connection confirm socket and the plug/unplug end is equal to the distance between the second connection confirm socket and the plug/unplug end. This helps the charging pile transmit the liquid cooling medium to the thermal management system of the power battery in time and can further avoid a misjudgment of the charging pile.

With reference to the third aspect, in a possible design, the charging plug further includes a communication plug. One end of the communication plug is configured to connect to the vehicle socket of the electric vehicle, and the other end of the communication plug is connected to a non-vehicle-mounted charger controller of the charging pile.

With reference to the third aspect, in a possible design, the charging plug further includes an auxiliary power plug. One end of the auxiliary power plug is configured to connect to an auxiliary power socket of the electric vehicle, and the other end of the auxiliary power plug is configured to send a direct current.

With reference to the third aspect, in a possible design, the direct current plug is connected to the power conversion apparatus through two direct current power supply loop contactors.

For beneficial effects that are not described in the third aspect, refer to beneficial effects in a fourth aspect. Details are not described.

According to a fourth aspect, a charging pile is provided. The charging pile includes a charging connector, a liquid cooling device, and a power conversion module. The charging connector is connected to the power conversion module and the liquid cooling device. The charging connector includes a charging plug and a connection confirm circuit. The charging plug includes a direct current plug, a liquid cooling plug, and a connection confirm plug. One end of the direct current plug is configured to connect to a direct current socket of an electric vehicle, and the other end of the direct current plug is connected to the power conversion apparatus of the charging pile. One end of the liquid cooling plug is configured to connect to a liquid cooling socket of the electric vehicle, and the other end of the liquid cooling plug is connected to the liquid cooling device of the charging pile. The liquid cooling plug is configured to receive a coolant output by the liquid cooling device. One end of the connection confirm plug is configured to connect to a connection confirm socket of the electric vehicle, and the other end of the connection confirm plug is connected to the connection confirm circuit. When the liquid cooling plug is successfully connected to the liquid cooling socket, and the direct current plug is successfully connected to the direct current socket, the direct current plug sends a direct current to charge a power battery.

The charging plug in this embodiment of this application includes the connection confirm plug. Because the connection confirm plug is connected to the connection confirm circuit, the charging pile may determine a status of connection between the liquid cooling socket and the liquid cooling plug based on a voltage at a detection point in the connection confirm circuit. In addition, when the liquid cooling socket is successfully connected to the liquid cooling plug and the charging pile charges the power battery at a high power, a liquid cooling system injects a cooling medium into the power battery to cool the power battery, to resolve a heat dissipation problem during charging of the power battery, thereby increasing a charging power provided by a charging apparatus for the power battery. In addition, the liquid cooling socket and the charging socket in this application are integrated into one interface. The charging pile needs to be configured with only one charging connector, and a user needs to insert the charging connector only once to implement a cooling function when the charging pile charges the power battery, thereby improving user experience.

With reference to the fourth aspect, in a possible design, when the liquid cooling plug is connected to the liquid cooling socket, and the direct current plug is connected to the direct current socket, the connection confirm circuit and a connection confirm circuit of the electric vehicle form a current loop by using the connection confirm plug and the connection confirm socket. The charging pile is configured to detect a voltage at a detection point in the connection confirm circuit to determine a status of connection between the direct current plug and the direct current socket. In response to the voltage at the detection point reaching a preset value, the charging pile determines that the direct current plug is successfully connected to the direct current socket.

In this embodiment of this application, the charging pile may determine the status of connection between the liquid cooling socket and the liquid cooling plug and the status of connection between the direct current socket and the direct current plug based on the voltage at the detection point. In addition, when the liquid cooling socket is successfully connected to the liquid cooling plug, the direct current socket is successfully connected to the direct current plug, and the charging pile charges the power battery at a high power, the liquid cooling system may cool the power battery by injecting the cooling medium into the power battery, to meet a heat dissipation requirement of the power battery during charging at the high power. This helps improve the charging power of the power battery and shortens charging duration of the electric vehicle.

With reference to the fourth aspect, in a possible design, the charging pile is configured to receive a packet indicating that the liquid cooling socket is successfully connected to the liquid cooling plug.

In this embodiment of this application, the charging pile may receive the packet indicating that the liquid cooling socket is successfully connected to the liquid cooling plug and that the direct current socket is successfully connected to the direct current plug. The charging pile does not need to determine the status of connection between the liquid cooling plug and the liquid cooling socket based on the voltage at the detection point in the connection confirm circuit, thereby improving determining efficiency.

With reference to the fourth aspect, in a possible design, the connection confirm plug includes a first connection confirm plug, a second connection confirm plug, and a third connection confirm plug, the connection confirm circuit includes a first connection confirm circuit, a second connection confirm circuit, and a third connection confirm circuit, and the first connection confirm plug, the second connection confirm plug, and the third connection confirm plug are respectively connected to the first connection confirm circuit, the second connection confirm circuit, and the third connection confirm circuit. The first connection confirm circuit includes a fourth resistor unit. The first connection confirm plug is connected to a device ground platform of the charging pile through the fourth resistor unit. The second connection confirm circuit includes a fifth resistor unit. The second connection confirm plug is connected to a voltage source through the fifth resistor unit. The detection point is located between the fifth resistor unit and the second connection confirm plug. The third connection confirm circuit includes a sixth resistor unit. The third connection confirm plug is connected to the device ground platform through the sixth resistor unit.

With reference to the fourth aspect, in a possible design, the charging pile is configured to determine the status of connection between the direct current plug and the direct current socket based on a voltage at the detection point between the fifth resistor unit and the second connection confirm plug. In response to the voltage at the detection point between the fifth resistor unit and the second connection confirm plug reaching a pile-end preset value, the charging pile determines that the direct current plug is successfully connected to the direct current socket.

In this embodiment of this application, because the detection point set in this application is connected to the voltage source in the charging pile, when the voltage at the detection point is a voltage output by the voltage source, the charging pile identifies that the direct current socket is not connected to the direct current plug. When the voltage at the detection point reaches the pile-end preset value, the charging pile identifies that the direct current socket is connected to the direct current plug. The status of connection between the direct current socket and the direct current plug is identified based on the voltage at the detection point, to improve accuracy of identifying the status of connection between the direct current socket and the direct current plug by the charging pile. This facilitates normal charging of the power battery.

With reference to the fourth aspect, in a possible design, the second connection confirm circuit further includes a normally closed switch, and the normally closed switch is located between the fifth resistor unit and the second connection confirm plug.

With reference to the fourth aspect, in a possible design, the detection point includes a detection point located between the fifth resistor unit and the normally closed switch and a detection point located between the normally closed switch and the second connection confirm plug.

With reference to the fourth aspect, in a possible design, the charging pile is configured to determine the status of connection between the direct current plug and the direct current socket based on a voltage at the detection point between the fifth resistor unit and the normally closed switch and a voltage between the normally closed switch and the second connection confirm plug. In response to the voltage at the detection point between the fifth resistor unit and the normally closed switch and the voltage at the detection point between the normally closed switch and the second connection confirm plug reaching the pile-end preset value, the charging pile is configured to determine that the direct current plug is successfully connected to the direct current socket.

In this embodiment of this application, the status of connection between the direct current socket and the direct current plug is identified based on the voltages at the two detection points, to further improve accuracy of identifying the status of connection between the direct current socket and the direct current plug by the charging pile. This facilitates normal charging of the power battery.

### BRIEF DESCRIPTION OF DRAWINGS

FIG. 1 is a diagram of a structure of a charging system according to an embodiment of this application;
FIG. 2 is a diagram of a structure of another charging system according to an embodiment of this application;
FIG. 3 is a diagram of a charging system according to an embodiment of this application;
FIG. 4 is a diagram of another charging system according to an embodiment of this application;
FIG. 5 is a diagram of still another charging system according to an embodiment of this application;
FIG. 6 is a diagram of yet another charging system according to an embodiment of this application;
FIG. 7 is a diagram of a charging interface according to an embodiment of this application; and
FIG. 8 is a diagram of another charging interface according to an embodiment of this application.

### DESCRIPTION OF EMBODIMENTS

The following describes technical solutions of embodiments in this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

Reference to "some embodiments" or the like described in this specification indicates that one or more embodiments of this application include a specific feature, structure, or characteristic described with reference to embodiments. Therefore, statements such as "in some embodiments" that appear at different places in this specification do not necessarily mean referring to a same embodiment, but mean "one or more but not all of embodiments", unless otherwise specifically emphasized in another manner. The terms "include", "have", and their variants all mean "include but are not limited to", unless otherwise specifically emphasized in another manner.

In this application, "equal" is not strictly equal, but within an allowable error range.

With the development of new energy vehicle technologies, many vehicle manufacturers gradually launch electric vehicles. Electric vehicles have become a choice for many users because of energy saving, environmental protection, and relatively mature technologies.

This application may be applied in a system in which a power supply apparatus and a load charge each other through a power distribution matrix. Especially, in a system including a charging pile and an electric vehicle, the charging pile may charge the electric vehicle by using electric energy that comes from a power grid, and the electric vehicle may also reversely output electric energy of the electric vehicle to the power grid.

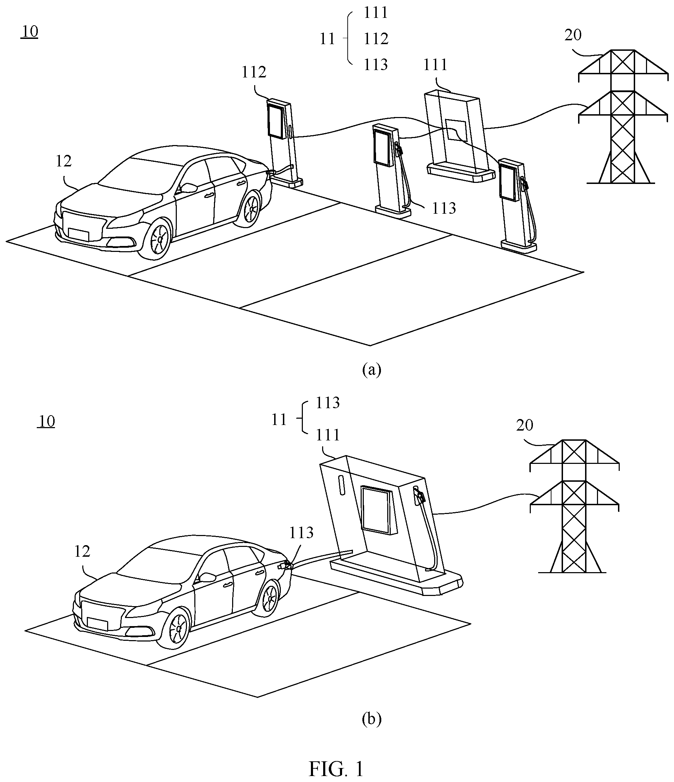

FIG. 1 is a diagram of an example structure of a charging system 10 according to an embodiment of this application.

With reference to (a) in FIG. 1 and (b) in FIG. 1, the charging system 10 may include a charging apparatus 11 and a vehicle 12.

In some embodiments, as shown in (a) in FIG. 1, the charging apparatus 11 may be a split-type apparatus. Specifically, the charging apparatus 11 may include a charging power unit 111, at least one charging dispenser 112, and at least one charging connector 113. The charging power unit 111 is electrically connected to each charging dispenser 112, each charging dispenser 112 is electrically connected to a charging connector 113 through a cable, and the charging connector 113 is configured to electrically connect to the electric vehicle 12.

The charging power unit 111 includes a plurality of power conversion apparatuses 111. The plurality of power conversion apparatuses may convert an alternating current from an external power grid 20 into a stable direct current, then transmit the stable direct current to the charging dispenser 112, and transmit the stable direct current to the electric vehicle 12 via the charging connector 113 electrically connected to the charging dispenser 112. The plurality of power conversion apparatuses may include, for example, an alternating current-direct current (alternating current-direct current, AC-DC) conversion apparatus and a direct current-direct current (direct current-direct current, DC-DC) conversion apparatus.

During specific implementation, a user may insert the charging connector 113 into a charging interface of the electric vehicle 12, so that the charging connector 113 is electrically connected to a power battery (not shown in the figure) in the electric vehicle 12, and the charging power unit 111 can further charge the power battery of the electric vehicle 12 via the charging connector 113.

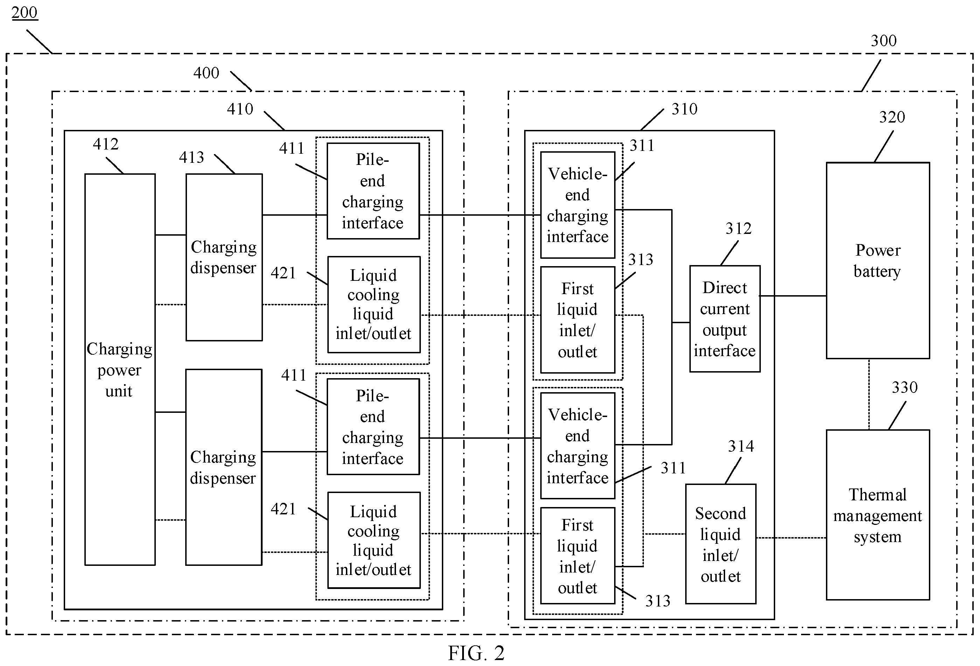

The charging dispenser 112 may include a housing, a human-machine interaction interface, a charging control unit, a metering and billing unit, and the like. The charging dispenser 112 may be configured to perform information exchange, energy transmission, metering and billing, and the like with the vehicle 12. A liquid cooling device may cool the charging dispenser. Alternatively, the liquid cooling device 112a may be independent of the charging dispenser 112, as shown in FIG. 2.

The electric vehicle 12 may be a transportation vehicle driven by electric energy to run. The electric vehicle 12 may be a new energy vehicle. The new energy vehicle may be a pure electric vehicle (pure electric vehicle/battery electric vehicle, pure EV/battery EV), a hybrid electric vehicle (hybrid electric vehicle, HEV), a range enhanced electric vehicle (range extended electric vehicle, REEV), a plug-in hybrid electric vehicle (plug-in hybrid electric vehicle, PHEV), or the like.

In some other embodiments, as shown in (b) in FIG. 1, the charging apparatus 11 may be an integrated charging apparatus. Specifically, the charging apparatus 11 may include only a charging power unit 111 and at least one charging connector 113 electrically connected to the charging power unit 111, and does not include a charging dispenser 112. A human-machine interaction interface, a charging control unit, a metering and billing unit, and the like may be directly disposed in the charging power unit 111. A plurality of power conversion apparatuses in the charging power unit 111 convert an alternating current from an external power grid 20 into a stable direct current, and then directly transmits the stable direct current to the electric vehicle 12 via the charging connector 113.

In the foregoing charging system 10, with a breakthrough in high-power charging technologies for batteries, the battery can be fully charged in a short time. However, in current actual application, when the charging apparatus 11 charges a power battery at a high power, heat generated by the power battery greatly increases accordingly. If the heat cannot be eliminated in time, normally charging the power battery by the charging apparatus 11 at the high power is affected.

The electric vehicle 12 usually has a thermal management system. The thermal management system can dissipate heat for the power battery. However, as a charging power increases, for example, in an ultra-fast charging scenario, the power battery generates more heat, effect of heat dissipation only via the thermal management system is limited, and a heat dissipation capability of the thermal management system cannot meet a heat dissipation requirement of the power battery during high-power charging.

Currently, although the power battery may be cooled by using an external cooling system, a connection port of the external cooling system is merely a single liquid inlet/outlet. When a charging pile charges the power battery, the electric vehicle and the external cooling system cannot identify whether the electric vehicle and the external cooling system are connected to each other. This affects normal high-power charging performed on the power battery by the charging pile.

On this basis, this application provides a charging system. The charging system includes a charging pile and an electric vehicle. The charging pile includes a charging apparatus and a liquid cooling device. When the charging apparatus charges a power battery of the electric vehicle at a high power, the liquid cooling device may transmit a coolant to a thermal management system of the power battery. Therefore, a heat dissipation problem during charging of the power battery can be resolved, and a charging power provided by the charging apparatus for the power battery can be increased.

FIG. 2 is a diagram of a structure of a charging system 200 according to an embodiment of this application. It should be understood that, in FIG. 2, a thin solid line is used to represent a power transmission line, and a short dashed line is used to represent a pipeline connection line.

The charging system 200 may include an electric vehicle 300 and a charging pile 400. The electric vehicle 300 may include a vehicle-mounted charging connection apparatus 310, a power battery 320, and a thermal management system 300. The charging pile 400 may include a charging apparatus 410 and a liquid cooling device (not shown in the figure).

It may be understood that the electric vehicle 300 may be the electric vehicle 12 shown in FIG. 1, and the charging apparatus 410 may be the split-type charging apparatus shown in (a) in FIG. 1 or the integrated charging apparatus shown in (b) in FIG. 1. For ease of description and understanding, in this embodiment of this application, an example in which the charging apparatus 410 is the split-type charging apparatus shown in (a) in FIG. 1 is used for description.

Still with reference to FIG. 2, the vehicle-mounted charging connection apparatus 310 may include a vehicle-end charging interface 311, a direct current output interface 312, a first liquid inlet/outlet 313, and a second liquid inlet/outlet 314, and the charging apparatus 410 may include a pile-end charging interface 411 and a liquid cooling liquid inlet/outlet 421.

The pile-end charging interface 411 and the liquid cooling liquid inlet/outlet 421 may be integrated into one charging connector, and the vehicle-end charging interface 311 and the first liquid inlet/outlet 313 may be integrated into one vehicle interface, so that the power battery 320 can be charged and cooled by using the charging connector. Although the pile-end charging interface 411 and the liquid cooling liquid inlet/outlet 421 are integrated into one charging connector, during specific connection, the pile-end charging interface 411 is still configured to electrically connect to the vehicle-end charging interface 311, and the liquid cooling liquid inlet/outlet 421 is connected to the first liquid inlet/outlet 313.

The vehicle-end charging interface 311 is electrically connected to the power battery 320 through the direct current output interface 312, so that the charging apparatus 410 can perform power transmission with the power battery 320 by using the vehicle-mounted charging connection apparatus 310. For example, the charging apparatus 410 may output a direct current from the pile-end charging interface 411, and the vehicle-mounted charging connection apparatus 310 transmits, to the power battery 320 through the direct current output interface 312, the direct current that is output by the charging apparatus 410 from the pile-end charging interface 411, to charge the power battery 320. Alternatively, the power battery 320 may output a direct current to the direct current output interface 312, and the vehicle-mounted charging connection apparatus 310 may transmit, to the charging apparatus 410 through the vehicle-end charging interface 311, the direct current output by the power battery 320, so that the power battery 320 discharges the charging apparatus 410.

In some embodiments, there may be one or more pile-end charging interfaces 411 and one or more vehicle-end charging interfaces 311. During specific implementation, as shown in FIG. 2, the split-type charging apparatus 410 may include a charging power unit 412 and at least one charging dispenser 413 electrically connected to the charging power unit 412. Each charging dispenser 413 may be electrically connected to a charging connector (not shown in the figure) through a cable. The pile-end charging interface 411 may be a charging plug disposed in each charging connector. The vehicle-end charging interface 311 may be a vehicle socket disposed in the vehicle-mounted charging connection apparatus 310.

The liquid cooling liquid inlet/outlet 421 is configured to connect to the first liquid inlet/outlet 313, and the first liquid inlet/outlet 313 may be connected to the power battery 320 through the second liquid inlet/outlet 314, so that the liquid cooling device can transmit a liquid-phase cooling medium to the power battery 320 through the vehicle-mounted charging connection apparatus 310, to cool the power battery 320.

In this embodiment of this application, the separate vehicle-mounted charging connection apparatus 310 is disposed in the electric vehicle 300. The vehicle-mounted charging connection apparatus 310 has the vehicle-end charging interface 311 configured to electrically connect to the charging apparatus 410 and the first liquid inlet/outlet 313 connected to the liquid cooling device, so that the power battery 320 can be directly connected to both the charging apparatus 410 and the liquid cooling device through the vehicle-mounted charging connection apparatus 310. In this way, when the charging apparatus 410 charges the power battery at a high power, the off-vehicle liquid cooling device may be connected to the power battery 320, to meet a heat dissipation requirement of the power battery 320 during high-power charging. This helps improve a charging power of the power battery 320 and shortens charging duration of the electric vehicle.

This application mainly relates to a design, in an existing charging connector, of an interface configured to transmit a cooling medium. In other words, the charging connector in this embodiment of this application is a liquid cooling charging composite connector.

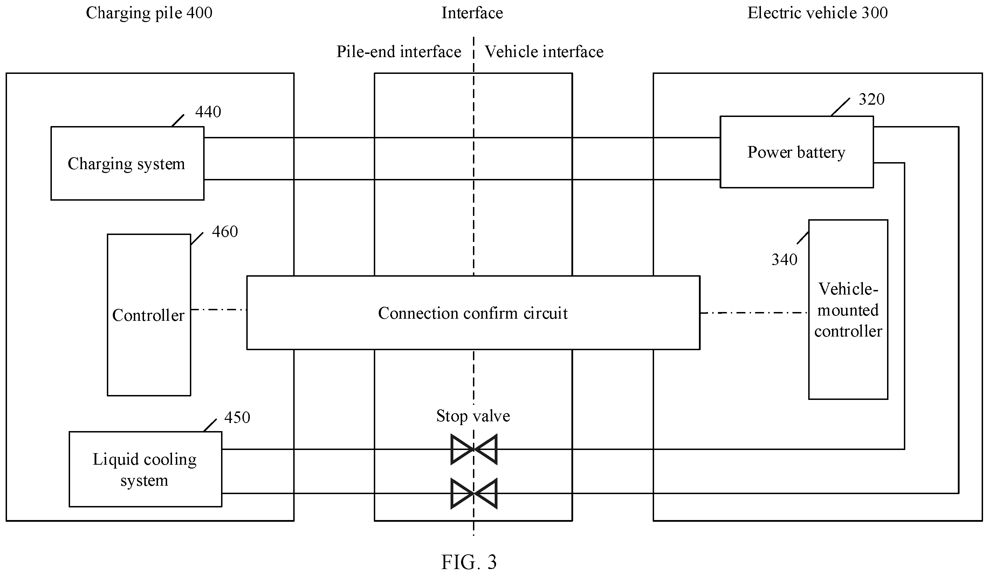

FIG. 3 is a diagram of a charging system according to an embodiment of this application. With reference to FIG. 3, the charging system includes an electric vehicle 300 and a charging pile 400, and the charging pile 400 includes a charging system 440, a liquid cooling system 450, and a controller 460. A pile-end interface in FIG. 3 includes the liquid cooling liquid inlet/outlet 421 and the pile-end charging interface 411 in FIG. 2. A vehicle interface includes a vehicle-end charging interface 311 and a first liquid inlet/outlet 313. In addition, the pile-end interface may further include a connection confirm port and a connection confirm circuit connected to the connection confirm port, and the vehicle interface may further include a connection confirm port and a connection confirm guiding circuit connected to the connection confirm port.

In an embodiment, the connection confirm circuit in the pile-end interface may be connected to the controller 460, and the connection confirm circuit in the pile-end interface is used by the controller 460 to identify a status of connection between the charging interface and the vehicle interface. The connection confirm circuit in the vehicle interface may be connected to a vehicle-mounted controller 340. The connection confirm circuit in the vehicle interface is used by the vehicle-mounted controller to identify a status of connection between the vehicle interface and the charging interface.

The following provides descriptions by separately using the vehicle-mounted charging connection apparatus, the electric vehicle, the liquid cooling device, and the charging pile as examples. It should be noted that the vehicle socket in the following may be understood as the foregoing vehicle interface, and the charging plug may be understood as the foregoing pile-end interface.

First, this application provides a vehicle-mounted charging connection apparatus. The vehicle-mounted charging connection apparatus is used in an electric vehicle. The vehicle-mounted charging connection apparatus includes a vehicle socket and a connection confirm circuit. The vehicle socket includes a direct current socket, a liquid cooling socket, and a connection confirm socket.

One end of the direct current socket is configured to connect to a direct current plug of a charging connector, and the other end of the direct current socket is connected to a power battery of the electric vehicle.

One end of the liquid cooling socket is configured to connect to a liquid cooling plug of the charging connector, and the other end of the liquid cooling socket is connected to a thermal management system of the power battery through a liquid cooling pipeline. The liquid cooling socket is configured to receive a coolant output by the liquid cooling plug, or the liquid cooling socket is configured to output a coolant to the liquid cooling plug.

One end of the connection confirm socket is configured to connect to a connection confirm plug of the charging connector, and the other end of the connection confirm socket is connected to the connection confirm circuit.

The vehicle-mounted charging connection apparatus is configured to determine, by using the connection confirm circuit, a status of connection between the direct current socket and the direct current plug, and a status of connection between the liquid cooling socket and the liquid cooling plug. When the liquid cooling socket is successfully connected to the liquid cooling plug and the direct current socket is successfully connected to the direct current plug, the direct current socket is configured to receive a direct current to charge the power battery.

In this embodiment of this application, the liquid cooling socket may include a liquid inlet/outlet, that is, include a liquid inlet and a liquid outlet. The liquid inlet of the liquid cooling socket is connected to a liquid outlet of the liquid cooling plug, and the liquid outlet of the liquid cooling socket is connected to a liquid return opening of the liquid cooling plug. Therefore, a cooling medium in a liquid cooling system in a charging pile is input to the thermal management system of the power battery through the liquid cooling plug and the liquid cooling socket, to cool the power battery. The charging socket and the liquid cooling socket in this embodiment of this application are two different sockets. The charging socket is connected to the charging plug of the charging pile. The charging socket may include a charging loop contactor. The charging loop contactor may be, for example, K5 and K6. The charging loop contactor may be configured to disconnect or connect a power transmission loop between the charging socket and the power battery that are electrically connected.

Although the liquid cooling socket and the charging socket are two different sockets, the liquid cooling socket and the charging socket are integrated into one interface. Correspondingly, the liquid cooling plug and the charging plug may be integrated into one charging connector.

In the conventional technologies, a connection port of an off-vehicle cooling system is merely a single liquid inlet/outlet. When a charging pile charges a power battery of an electric vehicle, the electric vehicle and the off-vehicle cooling system cannot identify whether the electric vehicle and the off-vehicle cooling system are connected to each other, which affects normal high-power charging performed on the power battery by the charging pile. The vehicle socket in this embodiment of this application includes the connection confirm socket. Because the connection confirm socket is connected to the connection confirm circuit, the vehicle-mounted charging connection apparatus may determine the status of connection between the liquid cooling socket and the liquid cooling plug based on a voltage at a detection point in the connection confirm circuit. In addition, when the vehicle liquid cooling socket is successfully connected to the liquid cooling plug and the charging pile charges the power battery at a high power, the liquid cooling system injects a cooling medium into the power battery to cool the power battery, to resolve a heat dissipation problem during charging of the power battery, thereby increasing a charging power provided by a charging apparatus for the power battery. In addition, the liquid cooling socket and the charging socket in this application are integrated into one interface. Correspondingly, the charging pile needs to be configured with only one charging connector, and a user needs to insert the charging connector only once to implement a cooling function when the charging pile charges the power battery, thereby improving user experience.

In an embodiment, when the liquid cooling socket is connected to the liquid cooling plug and the direct current socket is connected to the direct current plug, the connection confirm circuit and a connection confirm circuit of the charging pile form a current loop by using the connection confirm socket and the connection confirm plug. The vehicle-mounted charging connection apparatus is configured to determine the status of connection between the liquid cooling socket and the liquid cooling plug and the status of connection between the direct current socket and the direct current plug based on the voltage at the detection point in the connection confirm circuit.

In response to the voltage at the detection point reaching a preset value, the vehicle-mounted charging connection apparatus determines that the liquid cooling socket is successfully connected to the liquid cooling plug and the direct current socket is successfully connected to the direct current plug.

In this embodiment of this application, when the liquid cooling socket is connected to the liquid cooling plug and the direct current socket is connected to the direct current plug, that is, when the vehicle socket of the vehicle-mounted charging connection apparatus is connected to the pile-end plug of the charging pile, the connection confirm circuit and the connection confirm circuit of the charging pile form a current loop by using the connection confirm socket and the connection confirm plug. A detection point may be set in the current loop. When a voltage at the detection point reaches a preset value, the vehicle-mounted charging connection apparatus determines that the vehicle socket is successfully connected to the pile-end plug, that is, the liquid cooling socket is successfully connected to the liquid cooling plug, and the direct current socket is successfully connected to the direct current plug.

In this design, the vehicle-mounted charging connection apparatus may determine the status of connection between the liquid cooling socket and the liquid cooling plug and the status of connection between the direct current socket and the direct current plug based on the voltage at the detection point. In addition, when the liquid cooling socket is successfully connected to the liquid cooling plug, the direct current socket is successfully connected to the direct current plug, and the charging pile charges the power battery at a high power, the liquid cooling system may cool the power battery by injecting the cooling medium into the power battery, to meet a heat dissipation requirement of the power battery during charging at the high power. This helps improve the charging power of the power battery and shortens charging duration of the electric vehicle.

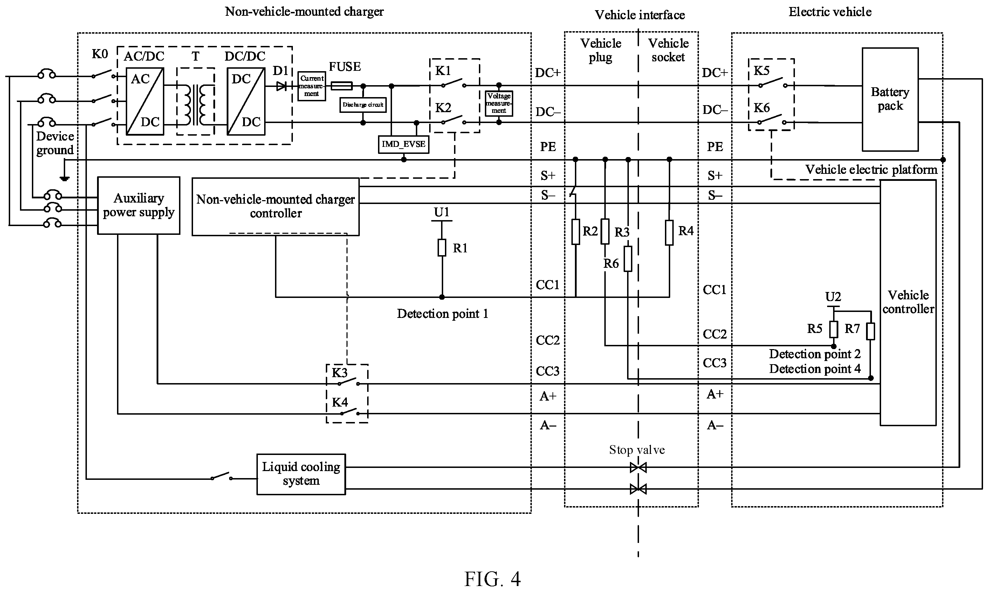

The preset value in this embodiment of this application is related to a specific circuit form of the connection confirm circuit and a location of the detection point. For details, refer to the following content about FIG. 4 to FIG. 6.

In an embodiment, in response to the liquid cooling socket being successfully connected to the liquid cooling plug and the direct current socket being successfully connected to the direct current plug, the vehicle-mounted charging connection apparatus is configured to send a packet indicating that the liquid cooling socket is successfully connected to the liquid cooling plug and that the direct current socket is successfully connected to the direct current plug.

In this embodiment of this application, when the vehicle-mounted charging connection apparatus determines that the liquid cooling socket is successfully connected to the liquid cooling plug and the direct current socket is successfully connected to the direct current plug, the vehicle-mounted charging connection apparatus may send a packet to the charging pile, where the packet indicates that the liquid cooling socket is successfully connected to the liquid cooling plug and the direct current socket is successfully connected to the direct current plug. After receiving the packet, the charging pile does not need to determine the status of connection between the liquid cooling plug and the liquid cooling socket based on the voltage at the detection point in the connection confirm circuit, thereby improving determining efficiency.

In an embodiment, the connection confirm socket includes a first connection confirm socket, a second connection confirm socket, and a third connection confirm socket, the connection confirm circuit includes a first connection confirm circuit, a second connection confirm circuit, and a third connection confirm circuit, and the first connection confirm socket, the second connection confirm socket, and the third connection confirm socket are respectively connected to the first connection confirm circuit, the second connection confirm circuit, and the third connection confirm circuit.

The vehicle-mounted charging connection apparatus is configured to determine the status of connection between the direct current socket and the direct current plug by using the first connection confirm circuit or the second connection confirm circuit. The vehicle-mounted charging connection apparatus is configured to determine the status of connection between the liquid cooling socket and the liquid cooling plug by using the third connection confirm circuit.

In this embodiment of this application, the connection confirm socket of the vehicle-mounted charging connection apparatus may include three connection confirm sockets, and the three connection confirm sockets are respectively connected to three connection confirm circuits.

The vehicle-mounted charging connection apparatus is configured to: determine the status of connection between the direct current socket and the direct current plug by using two connection confirm circuits (that is, the first connection confirm circuit and the second connection confirm circuit) of the three connection circuits, and determine the status of connection between the liquid cooling socket and the liquid cooling plug by using the other (that is, the third connection confirm circuit) of the three connection confirm circuits except the two connection confirm circuits.

The first connection confirm socket and the second connection confirm socket in this embodiment of this application may respectively correspond to sockets of a CC2 port and a CC1 port. The first connection confirm circuit is a circuit connected to the CC2 port, and the second connection confirm circuit is a circuit connected to the CC1 port. The vehicle-mounted charging connection apparatus may determine the status of connection between the direct current socket and the direct current plug by using the circuit connected to the CC1 port or the circuit connected to the CC2 port.

The third connection confirm socket in this embodiment of this application may correspond to a socket of a CC3 port. The third connection confirm circuit is a circuit connected to the CC3 port. The vehicle-mounted charging connection apparatus may determine the status of connection between the liquid cooling socket and the liquid cooling plug by using the circuit connected to the CC3 port.

In this embodiment of this application, the vehicle-mounted charging connection apparatus determines the status of connection between the direct current socket and the direct current plug by using the first connection confirm circuit or the second connection confirm circuit, determines the status of connection between the liquid cooling socket and the liquid cooling plug by using the third connection confirm circuit, and may respectively determine the status of connection between the direct current socket and the direct current plug and the status of connection between the liquid cooling socket and the liquid cooling plug by using different connection confirm circuits, to improve accuracy of determining the connection statuses.

In this application, the connection confirm circuit of the vehicle-mounted charging connection apparatus may be designed in different forms. The following describes several possible circuit design forms with reference to the accompanying drawings.

In an embodiment, the first connection confirm circuit includes a first resistor unit, and the first connection confirm socket is connected to a voltage source through the first resistor unit.

The vehicle-mounted charging connection apparatus is configured to detect a voltage at a detection point between the first resistor unit and the first connection confirm socket, to determine the status of connection between the direct current socket and the direct current plug. In response to the voltage at the detection point between the first resistor unit and the first connection confirm socket reaching a first vehicle-end preset value, the vehicle-mounted charging connection apparatus is configured to determine that the direct current socket is successfully connected to the direct current plug.

FIG. 4 is a diagram of a charging system according to an embodiment of this application. The first resistor unit includes a resistor R5. The first connection confirm socket is a socket corresponding to a CC2 port. The voltage source is U2. The detection point between the first resistor unit and the first connection confirm socket is a detection point 2.

Before the direct current socket is connected to the direct current plug, because the detection point 2 is connected to the voltage source U2, a voltage at the detection point 2 is a voltage output by the voltage source U2. Only when the direct current socket is connected to the direct current plug, the voltage source U2, the resistor R5 in the electric vehicle, a resistor R3 in the charging pile, and a ground cable in the charging pile form a loop. Because of a voltage division function of the resistors, the voltage at the detection point 2 reaches the first vehicle-end preset value.

For example, if the voltage output by the voltage source U2 is set to 12 V, and resistance values of R3 and R5 are equal, the first vehicle-end preset value is 6 V. In this design, if the voltage at the detection point 2 is 6 V, the vehicle-mounted charging connection apparatus identifies that the direct current socket is successfully connected to the direct current plug.

For another example, the voltage output by the voltage source U2 is still set to 12 V, but resistance values of R3 and R5 are not equal. For example, if R3 is 2 Ω, and R5 is 4 Ω, the first vehicle-end preset value is 4 V. In this design, if the voltage at the detection point 2 is 4 V, the vehicle-mounted charging connection apparatus identifies that the direct current socket is successfully connected to the direct current plug.

Therefore, based on the foregoing analysis, when the voltage at the detection point 2 is the voltage output by the voltage source U2, the vehicle-mounted charging connection apparatus can identify that the direct current socket is not connected to the direct current plug. When the voltage at the detection point 2 reaches the first vehicle-end preset value, the vehicle-mounted charging connection apparatus can identify that the direct current socket is connected to the direct current plug.

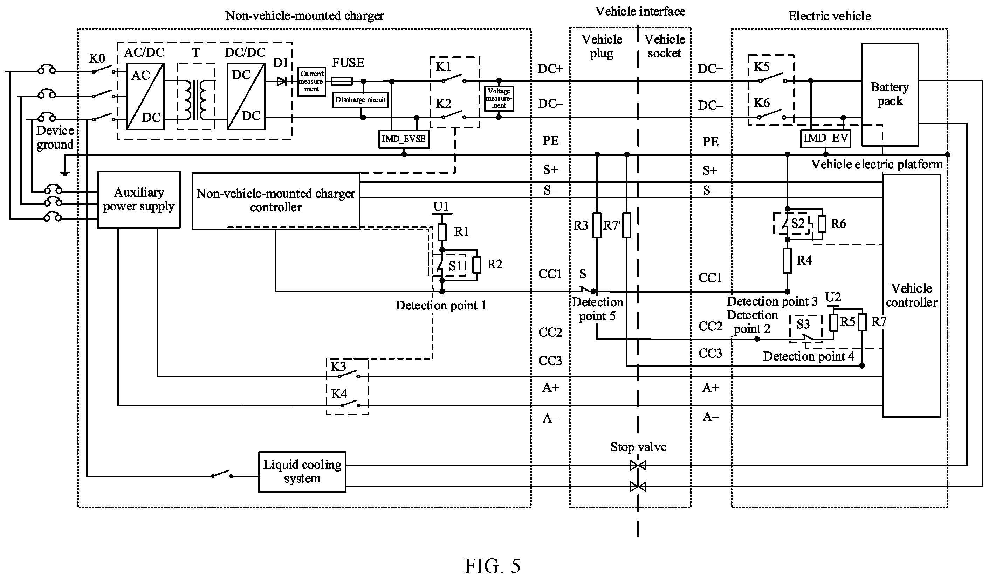

FIG. 5 is a diagram of another charging system according to an embodiment of this application. The first resistor unit includes a resistor R5 and a switch S3. The first connection confirm socket is a socket corresponding to a CC2 port. The detection point between the first resistor unit and the first connection confirm socket is still a detection point 2. A specific determining process is similar to that in FIG. 4. For brevity, details are not described again.

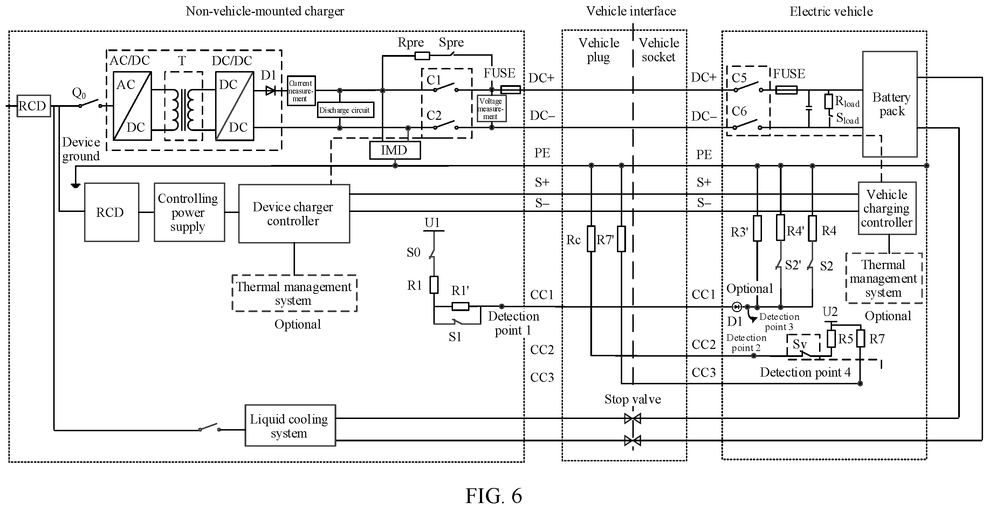

FIG. 6 is a diagram of still another charging system according to an embodiment of this application. The first resistor unit includes a resistor R5 and a switch Sv. The first connection confirm socket is a socket corresponding to a CC2 port. The detection point between the first resistor unit and the first connection confirm socket is still a detection point 2. A specific determining process is similar to that in FIG. 4. For brevity, details are not described again.

In this embodiment of this application, because the detection point set in this application is connected to the voltage source U2 in the electric vehicle, when the voltage at the detection point is a voltage output by the voltage source U2, the vehicle-mounted charging connection apparatus identifies that the direct current socket is not connected to the direct current plug. When the voltage at the detection point reaches the first vehicle-end preset value, the vehicle-mounted charging connection apparatus identifies that the direct current socket is connected to the direct current plug. The status of connection between the direct current socket and the direct current plug is identified based on the voltage at the detection point, to improve accuracy of identifying the status of connection between the direct current socket and the direct current plug by the vehicle-mounted charging connection apparatus. This facilitates normal charging of the power battery.

According to the description in the foregoing embodiment, when the voltage at the detection point 2 reaches the first vehicle-end preset value, the vehicle-mounted charging connection apparatus determines that the direct current socket and the direct current plug are in a connected state. In addition, the vehicle-mounted charging connection apparatus may further determine a status of connection between the first resistor unit and the voltage source based on a specific voltage value at the detection point 2.

For example, if good internal contact is achieved in the electric vehicle, because the detection point 2 is located between the resistor R5 and the resistor R3, due to the voltage division function of the resistors, the voltage at the detection point 2 should be greater than 0 and less than the voltage output by the voltage source (that is, the first vehicle-end preset value). For example, if the voltage output by the voltage source is 12 V, and the resistance values of R5 and R3 are equal, the voltage at the detection point 2 is 6 V.

If poor internal contact exists in the electric vehicle, for example, R5 is not connected to the voltage source U2 and is in a suspended state. It is equivalent to a case in which R5 and R3 are directly connected to a ground cable in a liquid cooling device. A voltage at any detection point on a branch circuit including R5, R3, and the ground cable is 0 V. Because the detection point 2 is located on the branch circuit including the resistor R5, the resistor R3, and the ground cable, the voltage at the detection point 2 is 0 V.

Therefore, the vehicle-mounted charging connection apparatus may further determine an internal connection status of the electric vehicle based on the voltage at the detection point 2, to help improve safety of the electric vehicle.

In an embodiment, the vehicle socket further includes a ground socket. One end of the ground socket is configured to connect to a ground plug of the charging connector, and the other end of the ground socket is connected to a vehicle body ground platform. The second connection confirm circuit includes a second resistor unit. The second connection confirm socket is connected to the vehicle body ground platform through the second resistor unit.

The vehicle-mounted charging connection apparatus is further configured to detect a voltage at a detection point between the second resistor unit and the second connection confirm socket, to determine the status of connection between the direct current socket and the direct current plug.

In response to the voltage at the detection point between the first resistor unit and the first connection confirm socket reaching the first vehicle-end preset value and the voltage at the detection point between the second resistor unit and the second connection confirm socket reaching a second vehicle-end preset value, the vehicle-mounted charging connection apparatus is configured to determine that the direct current socket is successfully connected to the direct current plug.

Still with reference to FIG. 5, the second resistor unit may include R4, R6, and a switch S2. The second connection confirm socket is a socket corresponding to a CC1 port. The detection point between the second resistor unit and the second connection confirm socket is a detection point 3.

Before the direct current socket is connected to the direct current plug, because the detection point 3 is connected to a vehicle electric platform, a voltage at the detection point 3 is 0 V. Only when the direct current socket is connected to the direct current plug, and it is assumed that a switch S1 and the switch S2 are turned on, a voltage source U1 in the charging pile, a resistor R1, and the resistor R4 in the electric vehicle form a loop. Because of a voltage division function of the resistors, the voltage at the detection point 3 reaches the second vehicle-end preset value.

For example, if the voltage output by the voltage source U1 is set to 12 V, and resistance values of R1 and R4 are equal, the second vehicle-end preset value is 6 V. In this design, if the voltage at the detection point 3 is 6 V, the vehicle-mounted charging connection apparatus identifies that the direct current socket is successfully connected to the direct current plug.

For another example, the voltage output by the voltage source U1 is still set to 12 V, but resistance values of R1 and R4 are not equal. For example, if R1 is 2 Ω, and R4 is 4 Ω, the second vehicle-end preset value is 8 V. In this design, if the voltage at the detection point 3 is 8 V, the vehicle-mounted charging connection apparatus identifies that the direct current socket is successfully connected to the direct current plug.

When the direct current socket is connected to the direct current plug, both the voltage at the detection point 2 and the voltage at the detection point 3 are the vehicle-end preset values. Therefore, with reference to analysis of the detection point 2 and the detection point 3, when the voltage at the detection point 3 is 0 V and the voltage at the detection point 2 is the voltage output by the voltage source U2, the vehicle-mounted charging connection apparatus may identify that the direct current socket is not connected to the direct current plug. When the voltage at the detection point 2 reaches the first vehicle-end preset value and the voltage at the detection point 3 reaches the second vehicle-end preset value, the vehicle-mounted charging connection apparatus can identify that the direct current socket is connected to the direct current plug.

With reference to FIG. 6, the second resistor unit may include R3', R4, R4', and switches S2 and S2'. The second connection confirm socket is a socket corresponding to a CC1 port. The detection point between the second resistor unit and the second connection confirm socket is still a detection point 3. A specific determining process is similar to that in FIG. 5. Details are not described again.

In this embodiment of this application, the status of connection between the direct current socket and the direct current plug is identified based on the voltages at the two detection points, to further improve accuracy of identifying the status of connection between the direct current socket and the direct current plug by the vehicle-mounted charging connection apparatus. This facilitates normal charging of the power battery.

In an embodiment, the third connection confirm circuit includes a third resistor unit, and the third connection confirm socket is connected to a voltage source through the third resistor unit.

The vehicle-mounted charging connection apparatus is configured to detect a voltage at a detection point between the third resistor unit and the third connection confirm socket, to determine the status of connection between the liquid cooling socket and the liquid cooling plug. In response to the voltage at the detection point between the third resistor unit and the third connection confirm socket reaching a third vehicle-end preset value, the vehicle-mounted charging connection apparatus is configured to determine that the liquid cooling socket is successfully connected to the liquid cooling plug.

Still with reference to FIG. 4, the figure shown in FIG. 4 includes a third connection confirm socket and a third connection confirm plug. The third connection confirm socket is a socket corresponding to the CC3 port. In this embodiment of this application, the third resistor unit is R7, the voltage source is still U2, and detection between the third resistor unit and the third connection confirm socket is a detection point 4. Before the liquid cooling socket is connected to the liquid cooling plug, because the detection point 4 is connected to the voltage source U2, a voltage at the detection point 4 is a voltage output by the voltage source U2. Only when the liquid cooling socket is connected to the liquid cooling plug, a current of the voltage source U2 flows through the resistor R7 in the electric vehicle, the resistor R6 in the charging pile, and the ground cable in the charging pile to form a loop. Because the detection point 4 is located between the resistor R7 and the resistor R6, the voltage at the detection point 4 can reach the third vehicle-end preset value because of the voltage division function of the resistor.

For example, if the voltage output by the voltage source U2 is set to 12 V, and resistance values of R7 and R6 are equal, the third vehicle-end preset value is 6 V. In this design, if the voltage at the detection point 4 is 6 V, the vehicle-mounted charging connection apparatus identifies that the liquid cooling socket and the liquid cooling plug are in a connected state.

For another example, the voltage output by the voltage source U2 is still set to 12 V, but resistance values of R7 and R6 are not equal. For example, if R7 is 2 Ω, and R6 is 4 Ω, the third vehicle-end preset value is 8 V. In this design, if the voltage at the detection point 4 is 8 V, the vehicle-mounted charging connection apparatus identifies that the liquid cooling socket and the liquid cooling plug are in a connected state.

Based on the foregoing analysis, when the voltage at the detection point 4 is the voltage output by the voltage source U2, the vehicle-mounted charging connection apparatus can identify that the liquid cooling socket is not connected to the liquid cooling plug. When the voltage at the detection point 4 reaches the third vehicle-end preset value, the vehicle-mounted charging connection apparatus can identify that the liquid cooling socket is connected to the liquid cooling plug.

Still with reference to FIG. 5, the figure shown in FIG. 5 includes a third connection confirm socket. In this embodiment of this application, the third resistor unit is R7, the voltage source is still U2, and detection between the third resistor unit and the third connection confirm socket is still a detection point 4. A specific identification process is similar to that in FIG. 4. For brevity, details are not described again.

Still with reference to FIG. 6, the figure shown in FIG. 6 includes a third connection confirm socket. In this embodiment of this application, the third resistor unit is R7, the voltage source is still U2, and detection between the third resistor unit and the third connection confirm socket is still a detection point 4. A specific identification process is similar to that in FIG. 4. For brevity, details are not described again.

In this embodiment of this application, because the detection point set in this application is connected to the voltage source in the electric vehicle, when the voltage at the detection point is the voltage output by the voltage source, the vehicle-mounted charging connection apparatus identifies that the liquid cooling socket is not connected to the liquid cooling plug. When the voltage at the detection point reaches the third vehicle-end preset value, the vehicle-mounted charging connection apparatus identifies that the liquid cooling socket is connected to the liquid cooling plug. The status of connection between the liquid cooling socket and the liquid cooling plug is identified based on the voltage at the detection point, to improve accuracy of identifying the status of connection between the liquid cooling socket and the liquid cooling plug by the vehicle-mounted charging connection apparatus. This helps the liquid cooling device transmit the cooling medium in the liquid cooling system to the power battery, to cool the power battery.

According to the description in the foregoing embodiment, when the voltage at the detection point 4 reaches the third vehicle-end preset value, the vehicle-mounted charging connection apparatus determines that the liquid cooling socket and the liquid cooling plug are in a connected state. In addition, the vehicle-mounted charging connection apparatus may further determine a status of connection between the third resistor unit and the voltage source based on a specific voltage value at the detection point 4.

For example, if good internal contact is achieved in the electric vehicle, because the detection point 4 is located between the resistor R6 and the resistor R7, due to the voltage division function of the resistors, the voltage at the detection point 4 should be greater than 0 and less than the voltage output by the voltage source (that is, the third vehicle-end preset value). For example, if the voltage output by the voltage source is 12 V, and the resistance values of R7 and R6 are equal, the voltage at the detection point 4 is 6 V.

If poor internal contact exists in the electric vehicle, for example, R7 is not connected to the voltage source U2 and is in a suspended state. It is equivalent to a case in which R7 and R6 are directly connected to a ground cable in a liquid cooling device. A voltage at any detection point on a branch circuit including R7, R6, and the ground cable is 0 V. Because the detection point 4 is located on the branch circuit including the resistor R7, the resistor R6, and the ground cable, the voltage at the detection point 4 is 0 V.

Therefore, the vehicle-mounted charging connection apparatus may further determine an internal connection status of the electric vehicle based on the voltage at the detection point 4, to help improve safety of the electric vehicle.

On this basis, the foregoing describes, from a perspective of the vehicle-mounted charging connection apparatus, different embodiments in which the vehicle-mounted charging connection apparatus determines the status of connection between the liquid cooling socket and the liquid cooling plug and the status of connection between the direct current socket and the direct current plug. The following describes these embodiments from a perspective of the charging connector and the charging pile.

This application provides a charging connector used in a charging pile. The charging connector includes a charging plug and a connection confirm circuit. The charging plug includes a direct current plug, a liquid cooling plug, and a connection confirm plug. One end of the direct current plug is configured to connect to a direct current socket of an electric vehicle, and the other end of the direct current plug is configured to connect to a power conversion apparatus of the charging pile. One end of the liquid cooling plug is configured to connect to a liquid cooling socket of the electric vehicle, and the other end of the liquid cooling plug is configured to connect to a liquid cooling device of the charging pile. The liquid cooling plug is configured to receive a coolant output by the liquid cooling device. One end of the connection confirm plug is configured to connect to a connection confirm socket of the electric vehicle, and the other end of the connection confirm plug is configured to connect to the connection confirm circuit.

This application further provides a charging pile. The charging pile includes a charging connector, a liquid cooling device, and a charging device. The charging connector includes a charging plug and a connection confirm circuit. The charging plug includes a direct current plug, a liquid cooling plug, and a connection confirm plug. One end of the direct current plug is configured to connect to a direct current socket of an electric vehicle, and the other end of the direct current plug is connected to the power conversion apparatus of the charging pile. One end of the liquid cooling plug is configured to connect to a liquid cooling socket of the electric vehicle, and the other end of the liquid cooling plug is connected to the liquid cooling device of the charging pile. The liquid cooling plug is configured to receive a coolant output by the liquid cooling device. One end of the connection confirm plug is configured to connect to a connection confirm socket of the electric vehicle, and the other end of the connection confirm plug is connected to the connection confirm circuit.

When the liquid cooling plug is successfully connected to the liquid cooling socket, and the direct current plug is successfully connected to the direct current socket, the direct current plug sends a direct current to charge a power battery.

The charging connector in this embodiment of this application may also be referred to as a liquid cooling charging composite connector. In this embodiment of this application, the charging plug of the charging connector further includes a liquid cooling plug in addition to the direct current plug, so that a cooling medium in the charging pile can enter an electric vehicle through the liquid cooling plug to cool the power battery.

In the conventional technologies, a connection port of an off-vehicle cooling system is merely a single liquid inlet/outlet. When a charging pile charges a power battery of an electric vehicle, the electric vehicle and the off-vehicle cooling system cannot identify whether the electric vehicle and the off-vehicle cooling system are connected to each other, which affects normal high-power charging performed on the power battery by the charging pile. In this embodiment of this application, when the liquid cooling plug is successfully connected to the liquid cooling socket, and the direct current plug is successfully connected to the direct current socket, the charging connector may send a direct current to charge the power battery. When the charging pile charges the power battery at a high power, the liquid cooling system cools the power battery by injecting the cooling medium into the power battery. In addition, the liquid cooling socket and the charging socket in this application are integrated into one interface. Correspondingly, the charging pile needs to be configured with only one charging connector, and a user needs to insert the charging connector only once to implement a cooling function when the charging pile charges the power battery, thereby improving user experience.

In an embodiment, for the charging connector, when the liquid cooling plug is connected to the liquid cooling socket, and the direct current plug is connected to the direct current socket, the connection confirm circuit and a connection confirm circuit of the electric vehicle form a current loop by using the connection confirm plug and the connection confirm socket. The charging pile connected to the charging connector is configured to detect a voltage at a detection point in the connection confirm circuit to determine a status of connection between the direct current plug and the direct current socket.

For the charging pile, in response to the voltage at the detection point reaching a preset value, the charging pile determines that the direct current plug is successfully connected to the direct current socket.

In this embodiment of this application, when the liquid cooling socket is connected to the liquid cooling plug and the direct current socket is connected to the direct current plug, that is, when the vehicle socket of the vehicle-mounted charging connection apparatus is connected to the charging plug of the charging apparatus, the connection confirm circuit and the connection confirm circuit of the charging pile form a current loop by using the connection confirm socket and the connection confirm plug. A detection point may be set in the current loop. When a voltage at the detection point reaches a preset value, the charging pile determines that the vehicle socket is successfully connected to the pile-end plug, that is, the liquid cooling socket is successfully connected to the liquid cooling plug, and the direct current socket is successfully connected to the direct current plug.

In this design, the charging pile may determine the status of connection between the direct current socket and the direct current plug based on the voltage at the detection point. In addition, when the liquid cooling socket is successfully connected to the liquid cooling plug, the direct current socket is successfully connected to the direct current plug, and the charging pile charges the power battery at a high power, the liquid cooling system may cool the power battery by injecting the cooling medium into the power battery, to meet a heat dissipation requirement of the power battery during charging at the high power. This helps improve the charging power of the power battery and shortens charging duration of the electric vehicle.

The preset value in this embodiment of this application is related to a specific circuit form of the connection confirm circuit and a location of the detection point. For details, refer to the following content about FIG. 4 to FIG. 6.

In an embodiment, the charging pile is configured to receive a packet indicating that the liquid cooling socket is successfully connected to the liquid cooling plug.

In this embodiment of this application, for determining of the status of connection between the liquid cooling socket and the liquid cooling socket, the charging pile may receive, from the vehicle-mounted charging connection apparatus, the packet indicating that the liquid cooling socket is successfully connected to the liquid cooling plug. Therefore, when the liquid cooling socket is successfully connected to the liquid cooling plug, the direct current socket is successfully connected to the direct current plug, and the charging pile charges the power battery at a high power, the liquid cooling system may cool the power battery by injecting the cooling medium into the power battery, to meet a heat dissipation requirement of the power battery during charging at the high power. This helps improve the charging power of the power battery and shortens charging duration of the electric vehicle.

With reference to the accompanying drawings, the following describes a specific circuit form of the connection confirm circuit and a policy for determining the status of connection between the direct current socket and the direct current plug by the charging pile.

In an embodiment, the connection confirm plug includes a first connection confirm plug, a second connection confirm plug, and a third connection confirm plug, the connection confirm circuit includes a first connection confirm circuit, a second connection confirm circuit, and a third connection confirm circuit, and the first connection confirm plug, the second connection confirm plug, and the third connection confirm plug are respectively connected to the first connection confirm circuit, the second connection confirm circuit, and the third connection confirm circuit.

The first connection confirm circuit includes a fourth resistor unit. The first connection confirm plug is connected to a device ground platform of the charging pile through the fourth resistor unit.

The second connection confirm circuit includes a fifth resistor unit. The second connection confirm plug is connected to a voltage source through the fifth resistor unit. The detection point is located between the fifth resistor unit and the second connection confirm plug.

The third connection confirm circuit includes a sixth resistor unit. The third connection confirm plug is connected to the device ground platform through the sixth resistor unit.

The charging pile is configured to determine the status of connection between the direct current plug and the direct current socket based on a voltage at the detection point between the fifth resistor unit and the second connection confirm plug.

In response to the voltage at the detection point between the fifth resistor unit and the second connection confirm plug reaching a pile-end preset value, the charging pile determines that the direct current plug is successfully connected to the direct current socket.

In this embodiment of this application, the charging pile may determine the status of connection between the direct current plug and the direct current socket by using a method in a charging standard.

With reference to FIG. 4, in this embodiment of this application, the fifth resistor unit is R1, the voltage source is still U1, and detection between the fifth resistor unit and the second connection confirm plug is a detection point 1. Before the direct current socket is connected to the direct current plug, because the detection point 1 is connected to the voltage source U1, a voltage at the detection point 1 is a voltage output by the voltage source U1. Only when the direct current socket is connected to the direct current plug, a current of the voltage source U1 flows through the resistor R1 in the direct current device, the resistor R4 in the electric vehicle, and the ground cable in the electric vehicle to form a loop. Because the detection point 1 is located between the resistor R1 and the resistor R4, the voltage at the detection point 1 can reach the pile-end preset value because of the voltage division function of the resistor.

For example, if the voltage output by the voltage source U1 is set to 12 V, and resistance values of R1 and R4 are equal, the pile-end preset value is 6 V. In this design, if the voltage at the detection point 1 is 6 V, the charging pile identifies that the direct current socket and the direct current plug are in a connected state.

For another example, the voltage output by the voltage source U1 is still set to 12 V, but resistance values of R1 and R4 are not equal, for example, if R1 is 2 Ω, and R4 is 4 Ω, the pile-end preset value is 8 V. In this design, if the voltage at the detection point 1 is 8 V, the charging pile identifies that the direct current socket and the direct current plug are in a connected state.

Based on the foregoing analysis, when the voltage at the detection point 1 is the voltage output by the voltage source U1, the charging pile can identify that the direct current socket is not connected to the direct current plug. When the voltage at the detection point 1 is the pile-end preset value, the charging pile can identify that the direct current socket is successfully connected to the direct current plug.

Still with reference to FIG. 5, in this embodiment of this application, the fifth resistor unit includes R1, R2, and a switch S1, the voltage source is still U1, and the detection point between the fifth resistor unit and the second connection confirm plug is still a detection point 1. A specific identification process is similar to that in FIG. 4. For brevity, details are not described again.

Still with reference to FIG. 6, in this embodiment of this application, the fifth resistor unit includes R1, R1', a switch S1, and a switch S0, the voltage source is still U1, and the detection point between the fifth resistor unit and the second connection confirm plug is still a detection point 1. A specific identification process is similar to that in FIG. 4. For brevity, details are not described again.

In this embodiment of this application, because the detection point set in this application is connected to the voltage source in the charging pile, when the voltage at the detection point is a voltage output by the voltage source, the charging pile identifies that the direct current socket is not connected to the direct current plug. When the voltage at the detection point reaches the pile-end preset value, the charging pile identifies that the direct current socket is connected to the direct current plug. The status of connection between the direct current socket and the direct current plug is identified based on the voltage at the detection point, to improve accuracy of identifying the status of connection between the direct current socket and the direct current plug by the charging pile. This facilitates normal charging of the power battery.

In an embodiment, the second connection confirm circuit further includes a normally closed switch. The normally closed switch is located between the fifth resistor unit and the second connection confirm plug. The detection point includes a detection point located between the fifth resistor unit and the normally closed switch and a detection point located between the normally closed switch and the second connection confirm plug.

The charging pile is configured to determine the status of connection between the direct current plug and the direct current socket based on a voltage at the detection point between the fifth resistor unit and the normally closed switch and a voltage at a detection point between the normally closed switch and the second connection confirm plug.

In response to the voltage at the detection point between the fifth resistor unit and the normally closed switch and the voltage at the detection point between the normally closed switch and the second connection confirm plug reaching the pile-end preset value, the charging pile determines that the direct current plug is successfully connected to the direct current socket.

With reference to FIG. 5, in this embodiment of this application, the fifth resistor unit includes R1, R2, and a switch S1, the normally closed switch is S, the detection point between the fifth resistor unit and the normally closed switch is a detection point 1, and the detection point between the normally closed switch and the second connection confirm plug is a detection point 5.

Before the direct current socket is connected to the direct current plug, because the detection point 1 is connected to the voltage source U1 and the switch S is a normally closed switch, both the voltage at the detection point 1 and a voltage at the detection point 5 are the voltage output by the voltage source U1. Only when the direct current socket is connected to the direct current plug, a current of the voltage source U1 flows through the resistor R1 in the direct current device, the resistor R4 in the electric vehicle, and the ground cable in the electric vehicle to form a loop. Because the detection point 1 and the detection point 5 are located between the resistor R1 and the resistor R4, the voltage at the detection point 1 and the voltage at the detection point 5 can reach the pile-end preset value because of the voltage division function of the resistor. In another possible case, the direct current socket is connected to the direct current plug, but the switch S is in an off state. In this case, the detection point 1 is connected to the voltage source U1, and the detection point 5 is connected to the ground cable in the electric vehicle. As a result, the voltage at the detection point 1 is the voltage output by the voltage source U1, and the voltage at the detection point 5 is 0 V.

For example, if the voltage output by the voltage source U1 is set to 12 V, and resistance values of R1 and R4 are equal, the pile-end preset value is 6 V. In this design, if both the voltage at the detection point 1 and the voltage at the detection point 5 are 6 V, it indicates that the direct current socket is successfully connected to the direct current plug. If the voltage at the detection point 1 is 12 V, and the voltage at the detection point 5 is 0 V, it indicates that the direct current socket and the direct current plug are in a connected state, but the switch S is turned off.

For another example, the voltage output by the voltage source U1 is still set to 12 V, but resistance values of R1 and R4 are not equal, for example, if R1 is 2 Ω, and R4 is 4 Ω, the pile-end preset value is 8 V. In this design, if both the voltage at the detection point 1 and the voltage at the detection point 5 are 8 V, it indicates that the direct current socket and the direct current plug are in the connected state. If the voltage at the detection point 1 is 12 V, and the voltage at the detection point 5 is 0 V, it indicates that the direct current socket and the direct current plug are in a connected state, but the switch S is turned off.

Based on the foregoing analysis, when the voltage at the detection point 1 and the voltage at the detection point 5 are the voltage output by the voltage source U1, it indicates that the direct current socket is not connected to the direct current plug. When the voltage at the detection point 1 and the voltage at the detection point 5 are the pile-end preset value, it indicates that the direct current socket is successfully connected to the direct current plug. When the voltage at the detection point 1 is the voltage output by the voltage source U1 and the voltage at the detection point 5 is 0 V, it indicates that the direct current socket is connected to the direct current plug but the switch S is in the off state.

In this embodiment of this application, the voltages at the two detection points indicate the status of connection between the direct current socket and the direct current plug, and the charging pile may determine the status of connection between the direct current socket and the direct current plug based on the voltages at the two detection points, to further improve accuracy of identifying the status of connection between the direct current socket and the direct current plug by the charging pile.

On this basis, the foregoing describes the connection confirm circuit, and determining of the status of connection between the direct current socket and the direct current plug and the status of connection between the liquid cooling socket and the liquid cooling plug by using the connection confirm circuit. The following describes a sequence of coupling contacts of the plug and the socket in a connection process.

In an embodiment, the vehicle socket includes a plug/unplug end, the plug/unplug end is configured to implement plugging/unplugging with the charging connector, and a distance between the third connection confirm socket and the plug/unplug end is greater than a distance between a liquid inlet/outlet of the liquid cooling socket and the plug/unplug end. The charging plug includes a plug/unplug end, the plug/unplug end is configured to implement plugging/unplugging with a vehicle socket, and a distance between the third connection confirm plug and the plug/unplug end is greater than a distance between a liquid inlet/outlet of the liquid cooling plug and the plug/unplug end.

In this embodiment of this application, the distance between the third connection confirm socket and the plug/unplug end is greater than the distance between the liquid inlet/outlet of the liquid cooling socket and the plug/unplug end. It is equivalent to that a contact of the liquid inlet/outlet of the liquid cooling socket is first coupled with a contact of the liquid inlet/outlet of the liquid cooling plug, and a contact of the third connection confirm socket is then coupled with a contact of the third connection confirm plug. In other words, coupling between the contact of the third connection confirm socket and the contact of the third connection confirm plug is later than coupling between the contact of the liquid inlet/outlet of the liquid cooling socket and the contact of the liquid inlet/outlet of the liquid cooling plug.

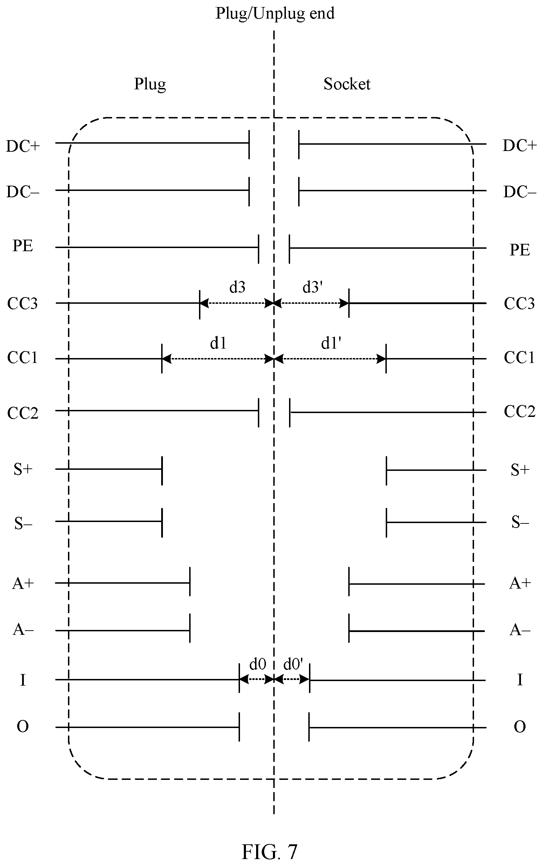

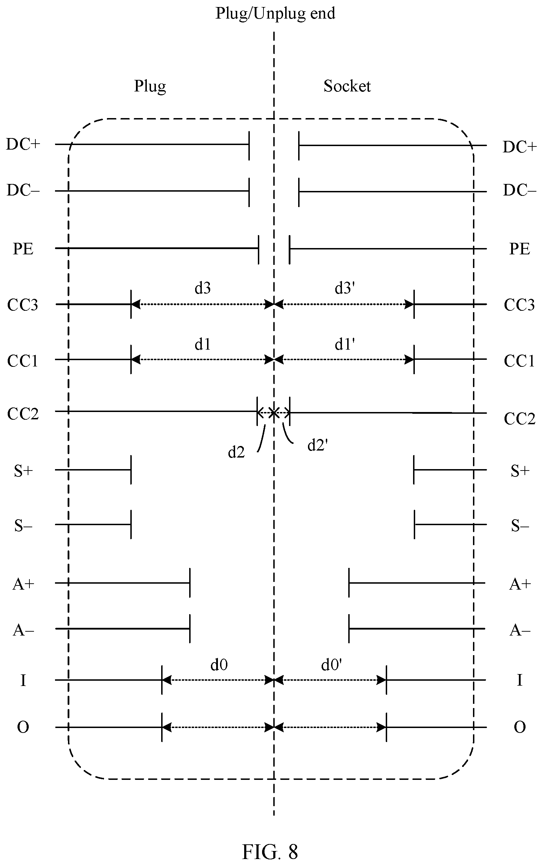

FIG. 7 and FIG. 8 each are a diagram of a charging interface according to an embodiment of this application. The plug/unplug end is a dashed line between the plug and the socket shown in the figure. DC+ and DC-are positive and negative direct current power ports, PE is a ground port, CC3 is a port indicating connection confirm of liquid inlet/outlet, CC1 and CC2 are ports indicating charging connection confirm, S+ and S- are charging communication ports, A+ and A- are positive and negative ports of a low-voltage auxiliary power supply, and I and O are a liquid inlet and a liquid outlet respectively.

In this embodiment of this application, the distance between the third connection confirm plug and the plug/unplug end is d3, and the distance between the liquid inlet/outlet of the liquid cooling plug and the plug/unplug end is d0, where d3>d0. The distance between the third connection confirm socket and the plug/unplug end is d3', and the distance between the liquid inlet/outlet of the liquid cooling socket and the plug/unplug end is d0', where d3'>d0'. Based on this design, in a process in which the vehicle socket is connected to the vehicle plug, the liquid inlet/outlet of the liquid cooling socket and the liquid inlet/outlet of the liquid cooling plug are first connected, and the third connection confirm socket and the third connection confirm plug (that is, CC3) are then connected. When the charging pile charges the electric vehicle at a high power, this helps the off-vehicle liquid cooling system cool the power battery. This is because, if the third connection confirm socket and the third connection confirm plug are first connected, and the liquid inlet/outlet of the liquid cooling socket and the liquid inlet/outlet of the liquid cooling plug are then connected, it is possible that the CC3 port is connected, but the liquid inlet/outlet of the liquid cooling socket and the liquid inlet/outlet of the liquid cooling plug are not connected, causing incorrect connection confirm of the liquid inlet/outlet. In this case, water leakage may occur.

In an embodiment, the distance between the third connection confirm socket and the plug/unplug end is less than or equal to the distance between the second connection confirm socket and the plug/unplug end, and the distance between the third connection confirm plug and the plug/unplug end is less than or equal to the distance between the second connection confirm plug and the plug/unplug end.

In this embodiment of this application, with reference to FIG. 7, the distance between the second connection confirm plug and the plug/unplug end is d1, and the distance between the second connection confirm socket and the plug/unplug end is d1', where d3≤d1, and d3'≤d1'. Based on this design, in a process in which the vehicle socket is connected to the vehicle plug, the contact of the third connection confirm socket and the contact of the third connection confirm plug (that is, CC3) are first connected, and the contact of the second connection confirm socket and the contact of the second connection confirm plug (that is, CC1) are then connected. This is equivalent to a case in which the charging pile performs final full connection confirm. In this design, an existing contact coupling sequence of the vehicle socket and the vehicle plug in a connection process may be used, and an existing protocol does not need to be changed, provided that coupling of the liquid inlet/outlet and coupling of the third connection confirm socket and the third connection confirm plug are added. The implementation is relatively simple.

It should be noted that, if d3=d1 and d3'=d1' are designed, in a process in which the vehicle socket is connected to the vehicle plug, the third connection confirm socket and the third connection confirm plug (that is, CC3), and the second connection confirm socket and the second connection confirm plug (that is, CC1) are connected at the same time. This is equivalent to a case in which the charging pile and the electric vehicle jointly perform final full connection confirm.

In an embodiment, the electric vehicle includes a traction apparatus. The traction apparatus is configured to draw the charging connector to move, so that the vehicle socket is fully connected to the charging connector.

The distance between the third connection confirm socket and the plug/unplug end is equal to the distance between the second connection confirm socket and the plug/unplug end, the distance between the liquid inlet/outlet of the liquid cooling socket and the plug/unplug end is less than the distance between the third connection confirm socket and the plug/unplug end, and the distance between the liquid inlet/outlet of the liquid cooling socket and the plug/unplug end is greater than or equal to a distance between the first connection confirm socket and the plug/unplug end.

The distance between the third connection confirm plug and the plug/unplug end is equal to the distance between the second connection confirm plug and the plug/unplug end, the distance between the liquid inlet/outlet of the liquid cooling plug and the plug/unplug end is less than the distance between the third connection confirm plug and the plug/unplug end, and the distance between the liquid inlet/outlet of the liquid cooling plug and the plug/unplug end is greater than or equal to a distance between the first connection confirm plug and the plug/unplug end.

In this embodiment of this application, the traction apparatus in the electric vehicle is configured to draw the charging connector to move, so that the vehicle socket is fully connected to the charging connector. In this case, in a process in which a user inserts the charging connector into the vehicle socket, the charging connector and the vehicle socket are first in a semi-connected state, and then the traction apparatus draws the charging connector to move, so that the charging connector and the vehicle socket are in a fully connected state. In this process, the traction apparatus draws the charging connector to move, so that the charging connector and the vehicle socket are in the fully connected state. The user does not need to manually push the charging connector, thereby improving user experience.

With reference to FIG. 8, in this embodiment of this application, the connection between the first connection confirm socket and the first connection confirm plug may indicate that the charging connector and the vehicle socket are in the semi-connected state. Therefore, the first connection confirm socket and the first connection confirm plug are first connected, that is, d2 and d2' are the shortest. The distance between the first connection confirm plug and the plug/unplug end is d2, and the distance between the first connection confirm socket and the plug/unplug end is d2'. The distance between the second connection confirm plug and the plug/unplug end is d1, the distance between the second connection confirm socket and the plug/unplug end is d1', the distance between the third connection confirm plug and the plug/unplug end is d3, and the distance between the third connection confirm socket and the plug/unplug end is d3', where d2≤d0<d1=d3, and d2'≤d0'<d1'=d3'. Based on this design, in a process of connecting the liquid cooling socket to the liquid cooling plug, the contact of the first connection confirm socket and the contact of the first connection confirm plug (that is, CC2) are first connected, and the liquid inlet/outlet of the liquid cooling socket and the liquid inlet/outlet of the liquid cooling plug are then connected; and then, the contact of the second connection confirm socket and the contact of the second connection confirm plug (that is, CC1) are connected, and the contact of the third connection confirm socket and the contact of the third connection confirm plug (that is, CC3) are finally connected. The connection between the first connection confirm socket and the first connection confirm plug may indicate that the charging connector and the vehicle socket are in the semi-connected state. The connection between the second connection confirm socket and the second connection confirm plug and the connection between the third connection confirm socket and the third connection confirm plug may indicate that the charging connector and the vehicle socket are in the fully connected state. Therefore, because d1=d3 and d1'=d3', it is equivalent to a case in which the electric vehicle and the charging pile jointly perform final full connection confirm. In other words, occasions of determining the status of connection between the liquid cooling socket and the liquid cooling plug by the electric vehicle and the charging pile are consistent. Therefore, this can ensure that the liquid cooling medium is transmitted to the thermal management system of the power battery in time and can avoid a misjudgment of the charging pile.

In this embodiment of this application, when a contact of the first connection confirm socket is connected to a contact of the first connection confirm plug, it indicates that the liquid cooling socket and the liquid cooling plug are in the semi-connected state. The traction apparatus may draw the charging connector to move, so that the charging connector is close to the vehicle socket. Finally, the charging connector and the vehicle socket are in the fully connected state. A user does not need to manually push the charging connector, thereby improving user experience. If d0<d2 is designed, that is, the contact of the liquid inlet/outlet of the liquid cooling socket and the contact of the liquid inlet/outlet of the liquid cooling plug are first connected, and the contact of the first connection confirm socket and the contact of the first connection confirm plug are then connected, a disadvantage of such a design is that the user needs to first connect the contact of the liquid inlet/outlet of the liquid cooling socket to the contact of the liquid inlet/outlet of the liquid cooling plug, but it is difficult for the user alone to successfully connect the contact of the liquid inlet/outlet of the liquid cooling socket to the contact of the liquid inlet/outlet of the liquid cooling plug, thereby reducing user experience.

In addition, in this embodiment of this application, it is designed that the distance between the second connection confirm socket and the plug/unplug end is equal to the distance between the third connection confirm socket and the plug/unplug end, and the distance between the second connection confirm plug and the plug/unplug end is equal to the distance between the third connection confirm plug and the plug/unplug end. In other words, d1=d3, and d1'=d3'. This is because, if d1<d3 and d1'<d3' are designed, it indicates that the third connection confirm socket and the third connection confirm plug are first connected, and the second connection confirm socket and the second connection confirm plug are then connected. It is possible that the third connection confirm socket is successfully connected to the third connection confirm plug, but the second connection confirm socket is still not connected to the second connection confirm plug. Based on this case, the charging pile determines that the liquid cooling socket is not connected to the liquid cooling plug, and the charging pile does not transmit the cooling medium to the thermal management system of the power battery. Therefore, a heat dissipation problem during charging of the power battery cannot be resolved, affecting high-power charging of the power battery.

In an embodiment, the vehicle socket further includes a communication socket. One end of the communication socket is configured to connect to the charging connector, and the other end of the communication socket is connected to a vehicle controller of the electric vehicle.

The charging plug further includes a communication plug. One end of the communication plug is configured to connect to the vehicle socket of the electric vehicle, and the other end of the communication plug is connected to a non-vehicle-mounted charger controller of the charging pile.

The communication socket and the communication plug in this embodiment of this application are S+ and S-. With reference to FIG. 4 to FIG. 6, the communication socket is connected to the vehicle controller, and the communication plug is connected to the non-vehicle charger controller. For content about the communication socket and the communication plug, refer to related content in the standard. Details are not described.

In an embodiment, the vehicle socket further includes an auxiliary power socket. One end of the auxiliary power socket is configured to connect to an auxiliary power plug of the charging connector, and the other end of the auxiliary power socket is configured to receive a direct current.

The charging plug further includes an auxiliary power plug. One end of the auxiliary power plug is configured to connect to an auxiliary power socket of the electric vehicle, and the other end of the auxiliary power plug is configured to send a direct current.

In this embodiment of this application, the auxiliary power socket and the auxiliary power plug may be sockets corresponding to A+ and A- in FIG. 7. For a specific description, refer to related content of A+ and A- in a charging standard. Details are not described.

In an embodiment, the direct current socket is connected to the power battery through two charging loop contactors. The direct current plug is connected to the power conversion apparatus through two direct current power supply loop contactors.

With reference to FIG. 4 to FIG. 6, the two charging loop contactors in this embodiment of this application are K5 and K6, and the two direct current power supply loop contactors are K1 and K2. The two charging loop contactors and the two direct current power supply loop contactors are jointly used to connect or disconnect a loop of charging the power battery by the charging pile.

In an embodiment, the vehicle-mounted charging connection apparatus is configured to: when the liquid cooling socket is successfully connected to the liquid cooling plug and the direct current socket is successfully connected to the direct current plug, send, to the charging pile, a packet that is used to request the charging pile to output a first charging power; or when the direct current socket is successfully connected to the direct current plug, send, to the charging pile, a packet that is used to request the charging pile to output a second charging power, where the second charging power is less than the first charging power.

In this embodiment of this application, when the liquid cooling socket is successfully connected to the liquid cooling plug and the direct current socket is successfully connected to the direct current plug, it indicates that the electric vehicle meets an ultra-fast charging condition. To be specific, when the power battery is charged at a high power, the off-vehicle liquid cooling device may transmit the cooling medium to the thermal management system of the power battery through the liquid cooling plug and the liquid cooling socket. Therefore, the vehicle-mounted charging connection apparatus may send, to the charging pile, the packet that is used to request the charging pile to output the first charging power. The first charging power may be a power higher than a specific threshold. Therefore, when the charging pile charges the power battery at the first charging power, the liquid cooling device injects the cooling medium into the power battery to cool the power battery, to meet a heat dissipation requirement of the power battery during charging at the high power. This helps improve the charging power of the power battery and shortens charging duration of the electric vehicle.

When the direct current socket is successfully connected to the direct current plug, it indicates that the electric vehicle does not meet an ultra-fast charging condition. To be specific, if the power battery is charged at a high power, the off-vehicle liquid cooling device cannot transmit the cooling medium to the power battery. Therefore, the vehicle-mounted charging connection apparatus may send, to the charging pile, the packet that is used to request the charging pile to output the second charging power. The second charging power may be a power lower than a specific threshold. Therefore, when the charging pile charges the power battery at the second charging power, because the second charging power is less than a specific threshold, the thermal management system in the vehicle can cool the power battery without using the off-vehicle liquid cooling device to cool the power battery.

In addition, this application further provides an electric vehicle. The electric vehicle includes a vehicle-mounted charging connection apparatus, a power battery, and a thermal management system. The thermal management system is configured to dissipate heat for the power battery.

The vehicle-mounted charging connection apparatus includes a vehicle socket and a connection confirm circuit. The vehicle socket includes a direct current socket, a liquid cooling socket, and a connection confirm socket.

One end of the direct current socket is configured to connect to a direct current plug of a charging connector, and the other end of the direct current socket is connected to the power battery of the electric vehicle.

One end of the liquid cooling socket is configured to connect to a liquid cooling plug of the charging connector, and the other end of the liquid cooling socket is connected to a thermal management system of the power battery through a liquid cooling pipeline. The liquid cooling socket is configured to receive a coolant output by the liquid cooling plug, or the liquid cooling socket is configured to output a coolant to the liquid cooling plug.

One end of the connection confirm socket is configured to connect to a connection confirm plug of the charging connector, and the other end of the connection confirm socket is connected to the connection confirm circuit.

The vehicle-mounted charging connection apparatus is configured to determine, by using the connection confirm circuit, a status of connection between the direct current socket and the direct current plug, and a status of connection between the liquid cooling socket and the liquid cooling plug. When the liquid cooling socket is successfully connected to the liquid cooling plug and the direct current socket is successfully connected to the direct current plug, the direct current socket is configured to receive a direct current to charge the power battery.

For a design of the connection confirm circuit in the vehicle-mounted charging connection apparatus, a specific identification process, and the like, refer to the related content in FIG. 4 to FIG. 6. Details are not described again.

In addition, this application further provides a control guiding circuit used in an electric vehicle and a charging pile. The control guiding circuit includes a connection confirm circuit. The electric vehicle includes a liquid cooling socket, a direct current socket, and a connection confirm socket. The charging pile includes a liquid cooling plug, a direct current plug, and a connection confirm plug.

One end of the liquid cooling socket is configured to connect to one end of the liquid cooling plug, the other end of the liquid cooling socket is configured to connect to a thermal management system of a power battery of the electric vehicle, and the other end of the liquid cooling plug is configured to receive or output a coolant.

One end of the direct current socket is configured to connect to one end of the direct current plug, the other end of the direct current socket is configured to connect to the power battery, and the other end of the direct current plug is configured to connect to a power conversion apparatus of the charging pile.

The connection confirm circuit includes a vehicle-end connection confirm circuit located in the electric vehicle and a pile-end connection confirm circuit located in the charging pile. The vehicle-end connection confirm circuit is connected to the liquid cooling socket and the direct current socket. The pile-end connection confirm circuit is connected to the liquid cooling plug and the direct current plug.

When the liquid cooling plug is connected to the liquid cooling socket and the direct current plug is connected to the direct current socket, the vehicle-end connection confirm circuit and the pile-end connection confirm circuit form a loop, and a voltage at a detection point in the loop indicates a status of connection between the liquid cooling plug and the liquid cooling socket and a status of connection between the direct current plug and the direct current socket.

In this embodiment of this application, the liquid cooling socket may include a liquid inlet/outlet including a liquid inlet and a liquid outlet. The liquid inlet of the liquid cooling socket is connected to a liquid outlet of the liquid cooling plug, and the liquid outlet of the liquid cooling socket is connected to a liquid return opening of the liquid cooling plug. Therefore, a cooling medium in a liquid cooling system in the charging pile is input to the thermal management system of the power battery through the liquid cooling plug and the liquid cooling socket, to cool the power battery. The charging socket and the liquid cooling socket in this embodiment of this application are two different sockets. The charging socket is connected to the charging plug of the charging pile. The charging socket may include a charging loop contactor. The charging loop contactor may be, for example, K5 and K6. The charging loop contactor may be configured to disconnect or connect a power transmission loop between the charging socket and the power battery that are electrically connected.

Although the liquid cooling socket and the charging socket are two different sockets, the liquid cooling socket and the charging socket are integrated into one interface. Correspondingly, the liquid cooling plug and the charging plug are integrated into one charging connector.

The control guiding circuit in this embodiment of this application may be used in the electric vehicle and the charging pile. In other words, a part of the connection confirm circuit (that is, the vehicle-end connection confirm circuit) in the control guiding circuit is located in the electric vehicle, and the other part of the connection confirm circuit (that is, the pile-end connection confirm circuit) is located in the charging pile. When the liquid cooling plug is not connected to the liquid cooling socket, and the direct current plug is not connected to the direct current socket, the vehicle-end connection confirm circuit located in the electric vehicle is a separate circuit, and the pile-end connection confirm circuit located in the charging pile is a separate circuit. Only when the liquid cooling plug is connected to the liquid cooling socket, and the direct current plug is connected to the direct current socket, the vehicle-end connection confirm circuit located in the electric vehicle and the pile-end connection confirm circuit located in the charging pile can form a loop.

In the conventional technologies, a connection port of an off-vehicle cooling system is merely a single liquid inlet/outlet. When a charging pile charges a power battery of an electric vehicle, the electric vehicle and the external cooling system cannot identify whether the electric vehicle and the off-vehicle cooling system are connected to each other, which affects normal high-power charging performed on the power battery by the charging pile. In this embodiment of this application, a voltage at a detection point in the control guiding circuit may indicate the status of connection between the direct current plug and the direct current socket and the status of connection between the liquid cooling plug and the liquid cooling socket. Therefore, when the vehicle socket is successfully connected to the charging plug, and the charging pile charges the power battery at a high power, the liquid cooling system injects a cooling medium into the power battery to cool the power battery, to resolve a heat dissipation problem during charging of the power battery, thereby increasing a charging power provided by a charging apparatus for the power battery.

The following describes a specific circuit form of the control guiding circuit.

In an embodiment, the charging pile further includes a ground plug, and the electric vehicle further includes a ground socket. One end of the ground plug is configured to connect to one end of the ground socket, the other end of the ground plug is configured to connect to a device ground platform, and the other end of the ground socket is configured to connect to a vehicle body ground platform. The connection confirm socket includes a liquid cooling connection confirm socket and a direct current connection confirm socket. The direct current connection confirm socket includes a first direct current connection confirm socket and a second direct current connection confirm socket. The direct current connection confirm plug includes a first direct current connection confirm plug and a second direct current connection confirm plug.

The vehicle-end connection confirm circuit includes a first vehicle-end connection confirm circuit. The first vehicle-end connection confirm circuit includes a first resistor and a first voltage source. The first direct current connection confirm socket is connected to the first voltage source through the first resistor.

The pile-end connection confirm circuit includes a first pile-end connection confirm circuit. The first pile-end connection confirm circuit includes a second resistor. The first direct current connection confirm plug is connected to the device ground platform through the second resistor.

The detection point is located between the first direct current connection confirm socket and the first resistor.

In an embodiment, a voltage at a detection point between the first direct current connection confirm socket and the first resistor reaches a first preset value, to indicate that the direct current plug is successfully connected to the direct current socket.

With reference to FIG. 4, in this embodiment of this application, the first resistor and the second resistor respectively include the resistor R5 and the resistor R3, the first voltage source is U2, and a detection point between the first resistor and the first direct current connection confirm socket is the detection point 2.

Before the direct current socket is connected to the direct current plug, because the detection point 2 is connected to the first voltage source U2, a voltage at the detection point 2 is a voltage output by the first voltage source U2. Only when the direct current socket is connected to the direct current plug, the first voltage source U2, the resistor R5 in the electric vehicle, a resistor R3 in the charging pile, and a ground cable in the charging pile form a loop. Because of a voltage division function of the resistors, the voltage at the detection point 2 reaches the first preset value.

For example, if the voltage output by the first voltage source U2 is set to 12 V, and resistance values of R3 and R5 are equal, the first preset value is 6 V. In this design, if the voltage at the detection point 2 is 6 V, it indicates that the direct current socket and the direct current plug are in a connected state.

For another example, the voltage output by the first voltage source U2 is still set to 12 V, but resistance values of R3 and R5 are not equal. For example, if R3 is 2 Ω, and R5 is 4 Ω, the first preset value is 4 V. In this design, if the voltage at the detection point 2 is 4 V, it indicates that the direct current socket is successfully connected to the direct current plug.

Therefore, based on the foregoing analysis, when the voltage at the detection point 2 is the voltage output by the first voltage source U2, it indicates that the direct current socket is not connected to the direct current plug. When the voltage at the detection point 2 reaches the first preset value, it indicates that the direct current socket is successfully connected to the direct current plug.

In this embodiment of this application, because the detection point set in this application is connected to the first voltage source in the electric vehicle, when the voltage at the detection point is the voltage output by the first voltage source, it indicates that the direct current socket is not connected to the direct current plug. When the voltage at the detection point reaches the first preset value, it indicates that the direct current socket is connected to the direct current plug. The voltage at the detection point may indicate a status of connection between the direct current socket and the direct current plug. The electric vehicle determines the status of connection between the direct current socket and the direct current plug based on the voltage at the detection point, to improve accuracy of determining the status of connection between the direct current socket and the direct current plug by the electric vehicle. This facilitates normal charging of the power battery.

In an embodiment, the electric vehicle further includes a ground socket. One end of the ground socket is configured to connect to the ground plug of the charging pile, and the other end of the ground socket is connected to the vehicle body ground platform. The vehicle-end connection confirm circuit further includes a second vehicle-end connection confirm circuit. The second vehicle-end connection confirm circuit includes a third resistor. The second direct current connection confirm socket is connected to the vehicle body ground platform through the third resistor.

The pile-end connection confirm circuit further includes a second pile-end connection confirm circuit. The second pile-end connection confirm circuit includes a fourth resistor and a second voltage source. The second direct current connection confirm plug is connected to the second voltage source through the fourth resistor.

The detection point is located between the second direct current connection confirm plug and the fourth resistor.

In an embodiment, the voltage at the detection point between the first direct current connection confirm socket and the first resistor reaches the first preset value, and a voltage at a detection point between the second direct current connection confirm plug and the fourth resistor reaches a second preset value, to indicate that the direct current plug is successfully connected to the direct current socket.

With reference to FIG. 4, in this embodiment of this application, the third resistor and the fourth resistor are respectively R4 and R1, the second voltage source is U1, and the detection point between the second direct current connection confirm plug and the fourth resistor is a detection point 1. Before the direct current socket is connected to the direct current plug, because the detection point 1 is connected to the second voltage source U1, a voltage at the detection point 1 is a voltage output by the second voltage source U1. Only when the direct current socket is connected to the direct current plug, a current of the second voltage source U1 flows through the resistor R1 in the direct current device, the resistor R4 in the electric vehicle, and the ground cable in the electric vehicle to form a loop. Because the detection point 1 is located between the resistor R1 and the resistor R4, the voltage at the detection point 1 can reach the second preset value because of the voltage division function of the resistor.

For example, if the voltage output by the second voltage source U1 is set to 12 V, and resistance values of R1 and R4 are equal, the first preset value is 6 V. In this design, if the voltage at the detection point 1 is 6 V, it indicates that the direct current socket and the direct current plug are in a connected state.

For another example, the voltage output by the second voltage source U1 is still set to 12 V, but resistance values of R1 and R4 are not equal. For example, if R1 is 2 Ω, and R4 is 4 Ω, the second preset value is 8 V. In this design, if the voltage at the detection point 1 is 8 V, it indicates that the direct current socket is successfully connected to the direct current plug.

Based on the foregoing analysis, when the voltage at the detection point 1 is the voltage output by the second voltage source U1, it indicates that the direct current socket is not connected to the direct current plug. When the voltage at the detection point 1 is the first preset value, it indicates that the direct current socket is successfully connected to the direct current plug.

In this embodiment of this application, because the detection point set in this application is connected to the second voltage source in the charging pile, when the voltage at the detection point is the voltage output by the second voltage source, it indicates that the direct current socket is not connected to the direct current plug. When the voltage at the detection point reaches the second preset value, it indicates that the direct current socket is connected to the direct current plug. The voltages at the two detection points may indicate the status of connection between the direct current socket and the direct current plug. The electric vehicle and the charging pile determine the status of connection between the direct current socket and the direct current plug based on the voltages at the two detection points, to improve accuracy of determining the status of connection between the direct current socket and the direct current plug by the electric vehicle and the charging pile. This facilitates normal charging of the power battery.

In an embodiment, the second pile-end connection confirm circuit further includes a normally closed switch, and the normally closed switch is located between the fourth resistor and the second direct current connection confirm plug. The detection point includes two detection points. One detection point is located between the fourth resistor and the normally closed switch, and the other detection point is located between the second direct current connection confirm plug and the normally closed switch.

In an embodiment, when the voltages at the two detection points reach the second preset value, it indicates that the direct current liquid cooling plug is successfully connected to the direct current socket.

With reference to FIG. 5, in this embodiment of this application, the fourth resistor is R1, the normally closed switch is S, the second voltage source is still U1, the detection point between the fourth resistor and the normally closed switch is a detection point 1, and the detection point between the second direct current connection confirm plug and the normally closed switch is a detection point 5.

Before the direct current socket is connected to the direct current plug, because the detection point 1 is connected to the second voltage source U1 and the switch S is a normally closed switch, both the voltage at the detection point 1 and a voltage at the detection point 5 are the voltage output by the second voltage source U1. Only when the direct current socket is connected to the direct current plug, a current of the second voltage source U1 flows through the resistor R1 in the direct current device, the resistor R4 in the electric vehicle, and the ground cable in the electric vehicle to form a loop. Because the detection point 1 and the detection point 5 are located between the resistor R1 and the resistor R4, the voltage at the detection point 1 and the voltage at the detection point 5 can reach the second preset value because of the voltage division function of the resistor. In another possible case, the direct current socket is connected to the direct current plug, but the switch S is in an off state. In this case, the detection point 1 is connected to the second voltage source U1, and the detection point 5 is connected to the ground cable in the electric vehicle. As a result, the voltage at the detection point 1 is the voltage output by the second voltage source U1, and the voltage at the detection point 5 is 0 V.

For example, if the voltage output by the second voltage source U1 is set to 12 V, and resistance values of R1 and R4 are equal, the second preset value is 6 V. In this design, if both the voltage at the detection point 1 and the voltage at the detection point 5 are 6 V, it indicates that the direct current socket is successfully connected to the direct current plug. If the voltage at the detection point 1 is 12 V, and the voltage at the detection point 5 is 0 V, it indicates that the direct current socket and the direct current plug are in a connected state, but the switch S is turned off.

For another example, the voltage output by the second voltage source U1 is still set to 12 V, but resistance values of R1 and R4 are not equal. For example, if R1 is 2 Ω, and R4 is 4 Ω, the second preset value is 8 V. In this design, if both the voltage at the detection point 1 and the voltage at the detection point 5 are 8 V, it indicates that the direct current socket and the direct current plug are in the connected state. If the voltage at the detection point 1 is 12 V, and the voltage at the detection point 5 is 0 V, it indicates that the direct current socket and the direct current plug are in a connected state, but the switch S is turned off.

Based on the foregoing analysis, when the voltage at the detection point 1 and the voltage at the detection point 5 are the voltage output by the second voltage source U1, it indicates that the direct current socket is not connected to the direct current plug. When the voltage at the detection point 1 and the voltage at the detection point 5 are the second preset value, it indicates that the direct current socket is successfully connected to the direct current plug. When the voltage at the detection point 1 is the voltage output by the second voltage source U1 and the voltage at the detection point 5 is 0 V, it indicates that the direct current socket is connected to the direct current plug but the switch S is in the off state.

In this embodiment of this application, the voltages at the two detection points indicate the status of connection between the direct current socket and the direct current plug, and the charging pile may determine the status of connection between the direct current socket and the direct current plug based on the voltages at the two detection points, to further improve accuracy of identifying the status of connection between the direct current socket and the direct current plug by the charging pile.

In an embodiment, the vehicle-end connection confirm circuit further includes a third vehicle-end connection confirm circuit. The third vehicle-end connection confirm circuit includes a fifth resistor and a first voltage source. The liquid cooling connection confirm socket is connected to the first voltage source through the fifth resistor. The pile-end connection confirm circuit includes a third pile-end connection confirm circuit. The third pile-end connection confirm circuit includes a sixth resistor. The liquid cooling connection confirm plug is connected to the device ground platform through the sixth resistor. The detection point is located between the liquid cooling connection confirm socket and the fifth resistor.

In an embodiment, a voltage at a detection point between the liquid cooling connection confirm socket and the fifth resistor reaches a third preset value, to indicate that the liquid cooling plug is successfully connected to the liquid cooling socket.

Still with reference to FIG. 4, the fifth resistor and the sixth resistor in this embodiment of this application are R7 and R6, the first voltage source in the electric vehicle is still U2, and the detection point between the liquid cooling connection confirm socket and the fifth resistor is a detection point 4. Before the liquid cooling socket is connected to the liquid cooling plug, because the detection point 4 is connected to the first voltage source U2, a voltage at the detection point 4 is a voltage output by the first voltage source U2. Only when the liquid cooling socket is connected to the liquid cooling plug, a current of the first voltage source U2 flows through the resistor R7 in the electric vehicle, the resistor R6 in the liquid cooling device, and the ground cable in the liquid cooling device to form a loop. Because the detection point 4 is located between the resistor R7 and the resistor R6, the voltage at the detection point 4 can reach the third preset value because of the voltage division function of the resistor.

For example, if the voltage output by the first voltage source U2 is set to 12 V, and resistance values of R7 and R6 are equal, the third preset value is 6 V. In this design, if the voltage at the detection point 4 is 6 V, it indicates that the liquid cooling socket and the liquid cooling plug are in the connected state.

For another example, the voltage output by the first voltage source U2 is still set to 12 V, but resistance values of R7 and R6 are not equal. For example, if R7 is 2 Ω, and R6 is 4 Ω, the third preset value is 8 V. In this design, if the voltage at the detection point 4 is 8 V, it indicates that the liquid cooling socket and the liquid cooling plug are in the connected state.

Based on the foregoing analysis, when the voltage at the detection point 4 is the voltage output by the first voltage source U2, it indicates that the liquid cooling socket is not connected to the liquid cooling plug. When the voltage at the detection point 4 is the third preset value, it indicates that the liquid cooling socket is successfully connected to the liquid cooling plug.

Still with reference to FIG. 5 and FIG. 6, a third connection confirm loop shown in FIG. 5 and FIG. 6 is similar to that in FIG. 4, and a specific identification process is similar to that in FIG. 4. For brevity, details are not described again.

In this embodiment of this application, because the detection point set in this application is connected to the first voltage source in the electric vehicle, when the voltage at the detection point is the voltage output by the first voltage source, it indicates that the liquid cooling socket is not connected to the liquid cooling plug. When the voltage at the detection point reaches the third preset value, it indicates that the liquid cooling socket is connected to the liquid cooling plug. The voltage at the detection point may indicate the status of connection between the liquid cooling socket and the liquid cooling plug. The electric vehicle determines the status of connection between the liquid cooling socket and the liquid cooling plug based on the voltage at the detection point, to improve accuracy of determining the status of connection between the liquid cooling socket and the liquid cooling plug by the electric vehicle. Therefore, when the charging pile charges the power battery at a high power, the liquid cooling device injects the cooling medium into the power battery to cool the power battery, to meet a heat dissipation requirement of the power battery during charging at the high power. This helps improve the charging power of the power battery and shortens charging duration of the electric vehicle.

In an embodiment, the control guiding circuit further includes a communication circuit, the charging pile further includes a communication plug, and the vehicle socket further includes a communication socket. The communication circuit includes a first communication circuit located in the charging pile and a second communication circuit located in the electric vehicle. One end of the first communication circuit is connected to a controller of the charging pile, and the other end of the first communication circuit is connected to the communication plug. One end of the second communication circuit is connected to a controller of the electric vehicle, and the other end of the second communication circuit is connected to the communication socket.

In an embodiment, the control guiding circuit further includes an auxiliary power circuit, the charging pile further includes an auxiliary power plug, and the vehicle socket further includes an auxiliary power socket. The auxiliary power circuit includes a first auxiliary power circuit located in the charging pile and a second auxiliary power circuit located in the electric vehicle. One end of the first auxiliary power circuit is connected to the controller of the charging pile, and the other end of the first auxiliary power circuit is connected to the auxiliary power plug. One end of the second auxiliary power circuit is connected to the controller of the electric vehicle, and the other end of the second auxiliary power circuit is connected to the auxiliary power socket.

For designs of the communication circuit and the auxiliary power circuit, refer to the related content in FIG. 4 to FIG. 6. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle-mounted charging connection apparatus used in an electric vehicle, wherein the vehicle-mounted charging connection apparatus comprises a vehicle socket and a connection confirm circuit, and the vehicle socket comprises a direct current socket, a liquid cooling socket, and a connection confirm socket;
one end of the direct current socket is configured to connect to a direct current plug of a charging connector, and the other end of the direct current socket is connected to a power battery of the electric vehicle;
one end of the liquid cooling socket is configured to connect to a liquid cooling plug of the charging connector, and the other end of the liquid cooling socket is connected to a thermal management system of the power battery through a liquid cooling pipeline; and the liquid cooling socket is configured to receive a coolant output by the liquid cooling plug, or the liquid cooling socket is configured to output a coolant to the liquid cooling plug;
one end of the connection confirm socket is configured to connect to a connection confirm plug of the charging connector, and the other end of the connection confirm socket is connected to the connection confirm circuit;
the vehicle-mounted charging connection apparatus is configured to: determine, by using the connection confirm circuit, a status of connection between the direct current socket and the direct current plug, and a status of connection between the liquid cooling socket and the liquid cooling plug; and
when the liquid cooling socket is successfully connected to the liquid cooling plug and the direct current socket is successfully connected to the direct current plug, the direct current socket is configured to receive a direct current to charge the power battery.

2. The vehicle-mounted charging connection apparatus according to claim 1, wherein when the liquid cooling socket is connected to the liquid cooling plug and the direct current socket is connected to the direct current plug, the connection confirm circuit and a connection confirm circuit of the charging pile form a current loop by using the connection confirm socket and the connection confirm plug, and the vehicle-mounted charging connection apparatus is configured to determine the status of connection between the liquid cooling socket and the liquid cooling plug and the status of connection between the direct current socket and the direct current plug based on a voltage at a detection point in the connection confirm circuit; and
in response to the voltage at the detection point reaching a preset value, the vehicle-mounted charging connection apparatus determines that the liquid cooling socket is successfully connected to the liquid cooling plug and the direct current socket is successfully connected to the direct current plug.

3. The vehicle-mounted charging connection apparatus according to claim 2, wherein in response to the liquid cooling socket being successfully connected to the liquid cooling plug and the direct current socket being successfully connected to the direct current plug, the vehicle-mounted charging connection apparatus is configured to send a packet indicating that the liquid cooling socket is successfully connected to the liquid cooling plug and that the direct current socket is successfully connected to the direct current plug.

4. The vehicle-mounted charging connection apparatus according to any one of claims 1 to 3, wherein the connection confirm socket comprises a first connection confirm socket, a second connection confirm socket, and a third connection confirm socket, the connection confirm circuit comprises a first connection confirm circuit, a second connection confirm circuit, and a third connection confirm circuit, and the first connection confirm socket, the second connection confirm socket, and the third connection confirm socket are respectively connected to the first connection confirm circuit, the second connection confirm circuit, and the third connection confirm circuit;
the vehicle-mounted charging connection apparatus is configured to determine the status of connection between the direct current socket and the direct current plug by using the first connection confirm circuit or the second connection confirm circuit; and
the vehicle-mounted charging connection apparatus is configured to determine the status of connection between the liquid cooling socket and the liquid cooling plug by using the third connection confirm circuit.

5. The vehicle-mounted charging connection apparatus according to claim 4, wherein the first connection confirm circuit comprises a first resistor unit, and the first connection confirm socket is connected to a voltage source through the first resistor unit.

6. The vehicle-mounted charging connection apparatus according to claim 5, wherein the vehicle-mounted charging connection apparatus is configured to detect a voltage at a detection point between the first resistor unit and the first connection confirm socket, to determine the status of connection between the direct current socket and the direct current plug; and
in response to the voltage at the detection point between the first resistor unit and the first connection confirm socket reaching a first vehicle-end preset value, the vehicle-mounted charging connection apparatus is configured to determine that the direct current socket is successfully connected to the direct current plug.

7. The vehicle-mounted charging connection apparatus according to claim 5 or 6, wherein the vehicle socket further comprises a ground socket, one end of the ground socket is configured to connect to a ground plug of the charging connector, and the other end of the ground socket is connected to the vehicle body ground platform; and
the second connection confirm circuit comprises a second resistor unit, and the second connection confirm socket is connected to the vehicle body ground platform through the second resistor unit.

8. The vehicle-mounted charging connection apparatus according to claim 7, wherein the vehicle-mounted charging connection apparatus is further configured to detect a voltage at a detection point between the second resistor unit and the second connection confirm socket, to determine the status of connection between the direct current socket and the direct current plug; and
in response to the voltage at the detection point between the first resistor unit and the first connection confirm socket reaching the first vehicle-end preset value and the voltage at the detection point between the second resistor unit and the second connection confirm socket reaching a second vehicle-end preset value, the vehicle-mounted charging connection apparatus is configured to determine that the direct current socket is successfully connected to the direct current plug.

9. The vehicle-mounted charging connection apparatus according to any one of claims 4 to 8, wherein the third connection confirm circuit comprises a third resistor unit, and the third connection confirm socket is connected to a voltage source through the third resistor unit.

10. The vehicle-mounted charging connection apparatus according to claim 9, wherein the vehicle-mounted charging connection apparatus is configured to detect a voltage at a detection point between the third resistor unit and the third connection confirm socket, to determine the status of connection between the liquid cooling socket and the liquid cooling plug; and
in response to the voltage at the detection point between the third resistor unit and the third connection confirm socket reaching a third vehicle-end preset value, the vehicle-mounted charging connection apparatus is configured to determine that the liquid cooling socket is successfully connected to the liquid cooling plug.

11. The vehicle-mounted charging connection apparatus according to any one of claims 4 to 10, wherein the vehicle socket comprises a plug/unplug end, the plug/unplug end is configured to implement plugging/unplugging with the charging connector, and a distance between the third connection confirm socket and the plug/unplug end is greater than a distance between a liquid inlet/outlet of the liquid cooling socket and the plug/unplug end.

12. The vehicle-mounted charging connection apparatus according to claim 11, wherein the distance between the third connection confirm socket and the plug/unplug end is less than or equal to a distance between the second connection confirm socket and the plug/unplug end.

13. The vehicle-mounted charging connection apparatus according to claim 11, wherein the electric vehicle comprises a traction apparatus, and the traction apparatus is configured to draw the charging connector to move, so that the vehicle socket is fully connected to the charging connector; and
the distance between the third connection confirm socket and the plug/unplug end is equal to a distance between the second connection confirm socket and the plug/unplug end, the distance between the liquid inlet/outlet of the liquid cooling socket and the plug/unplug end is less than the distance between the third connection confirm socket and the plug/unplug end, and the distance between the liquid inlet/outlet of the liquid cooling socket and the plug/unplug end is greater than or equal to a distance between the first connection confirm socket and the plug/unplug end.

14. The vehicle-mounted charging connection apparatus according to any one of claims 1 to 13, wherein the vehicle socket further comprises a communication socket; and one end of the communication socket is configured to connect to the charging connector, and the other end of the communication socket is connected to a vehicle controller of the electric vehicle.

15. The vehicle-mounted charging connection apparatus according to any one of claims 1 to 14, wherein the vehicle socket further comprises an auxiliary power socket; and one end of the auxiliary power socket is configured to connect to an auxiliary power plug of the charging connector, and the other end of the auxiliary power socket is configured to receive a direct current.

16. The vehicle-mounted charging connection apparatus according to any one of claims 1 to 15, wherein the direct current socket is connected to the power battery through two charging loop contactors.

17. The vehicle-mounted charging connection apparatus according to any one of claims 1 to 16, wherein the vehicle-mounted charging connection apparatus is configured to:
when the liquid cooling socket is successfully connected to the liquid cooling plug and the direct current socket is successfully connected to the direct current plug, send, to the charging pile, a packet that is used to request the charging pile to output a first charging power; or
when the direct current socket is successfully connected to the direct current plug, send, to the charging pile, a packet that is used to request the charging pile to output a second charging power, wherein the second charging power is less than the first charging power.

18. An electric vehicle, comprising the vehicle-mounted charging connection apparatus according to any one of claims 1 to 17, a power battery, and a thermal management system, wherein the thermal management system is configured to dissipate heat for the power battery.

19. A charging connector used in a charging pile, wherein the charging connector comprises a charging plug and a connection confirm circuit, and the charging plug comprises a direct current plug, a liquid cooling plug, and a connection confirm plug;
one end of the direct current plug is configured to connect to a direct current socket of an electric vehicle, and the other end of the direct current plug is configured to connect to a power conversion apparatus of the charging pile;
one end of the liquid cooling plug is configured to connect to a liquid cooling socket of the electric vehicle, and the other end of the liquid cooling plug is configured to connect to a liquid cooling device of the charging pile; and the liquid cooling plug is configured to receive a coolant output by the liquid cooling device; and
one end of the connection confirm plug is configured to connect to a connection confirm socket of the electric vehicle, and the other end of the connection confirm plug is configured to connect to the connection confirm circuit.

20. The charging connector according to claim 19, wherein when the liquid cooling plug is connected to the liquid cooling socket and the direct current plug is connected to the direct current socket, the connection confirm circuit and a connection confirm circuit of the electric vehicle form a current loop by using the connection confirm plug and the connection confirm socket, and the charging pile connected to the charging connector is configured to detect a voltage at a detection point in the connection confirm circuit, to determine a status of connection between the direct current plug and the direct current socket.

21. The charging connector according to claim 19 or 20, wherein the connection confirm plug comprises a first connection confirm plug, a second connection confirm plug, and a third connection confirm plug, the connection confirm circuit comprises a first connection confirm circuit, a second connection confirm circuit, and a third connection confirm circuit, and the first connection confirm plug, the second connection confirm plug, and the third connection confirm plug are respectively connected to the first connection confirm circuit, the second connection confirm circuit, and the third connection confirm circuit;
the first connection confirm circuit comprises a fourth resistor unit, and the first connection confirm plug is connected to a device ground platform of the charging pile through the fourth resistor unit;
the second connection confirm circuit comprises a fifth resistor unit, the second connection confirm plug is connected to a voltage source through the fifth resistor unit, and the detection point is located between the fifth resistor unit and the second connection confirm plug; and
the third connection confirm circuit comprises a sixth resistor unit, and the third connection confirm plug is connected to the device ground platform through the sixth resistor unit;

22. The charging connector according to claim 21, wherein the second connection confirm circuit further comprises a normally closed switch, and the normally closed switch is located between the fifth resistor unit and the second connection confirm plug.

23. The charging connector according to claim 22, wherein the detection point comprises a detection point located between the fifth resistor unit and the normally closed switch and a detection point located between the normally closed switch and the second connection confirm plug.

24. The charging connector according to any one of claims 21 to 23, wherein the charging plug comprises a plug/unplug end, the plug/unplug end is configured to implement plugging/unplugging with the vehicle socket, and a distance between the third connection confirm plug and the plug/unplug end is greater than a distance between a liquid inlet/outlet of the liquid cooling plug and the plug/unplug end.

25. The charging connector according to any one of claims 21 to 24, wherein the distance between the third connection confirm plug and the plug/unplug end is less than or equal to a distance between the second connection confirm plug and the plug/unplug end.

26. The charging connector according to any one of claims 21 to 24, wherein the distance between the third connection confirm plug and the plug/unplug end is equal to the distance between the second connection confirm plug and the plug/unplug end, the distance between the liquid inlet/outlet of the liquid cooling plug and the plug/unplug end is less than the distance between the third connection confirm plug and the plug/unplug end, and the distance between the liquid inlet/outlet of the liquid cooling plug and the plug/unplug end is greater than or equal to a distance between the first connection confirm plug and the plug/unplug end.

27. The charging connector according to any one of claims 19 to 26, wherein the charging plug further comprises a communication plug; and one end of the communication plug is configured to connect to the vehicle socket of the electric vehicle, and the other end of the communication plug is connected to a controller of the charging pile.

28. The charging connector according to any one of claims 19 to 27, wherein the charging plug further comprises an auxiliary power plug; and one end of the auxiliary power plug is configured to connect to an auxiliary power socket of the electric vehicle, and the other end of the auxiliary power plug is configured to send a direct current.

29. The charging connector according to any one of claims 19 to 28, wherein the direct current plug is connected to the power conversion apparatus through two direct current power supply loop contactors.

30. A charging pile, wherein the charging pile comprises a charging connector, a liquid cooling device, and a power conversion module, the charging connector is connected to the power conversion module and the liquid cooling device, the charging connector comprises a charging plug and a connection confirm circuit, and the charging plug comprises a direct current plug, a liquid cooling plug, and a connection confirm plug;
one end of the direct current plug is configured to connect to a direct current socket of an electric vehicle, and the other end of the direct current plug is connected to a power conversion apparatus of the charging pile;
one end of the liquid cooling plug is configured to connect to a liquid cooling socket of the electric vehicle, and the other end of the liquid cooling plug is configured to connect to the liquid cooling device of the charging pile; and the liquid cooling plug is configured to receive a coolant output by the liquid cooling device;
one end of the connection confirm plug is configured to connect to a connection confirm socket of the electric vehicle, and the other end of the connection confirm plug is configured to connect to the connection confirm circuit; and
when the liquid cooling plug is successfully connected to the liquid cooling socket, and the direct current plug is successfully connected to the direct current socket, the direct current plug sends a direct current to charge a power battery.

31. The charging pile according to claim 30, wherein when the liquid cooling plug is connected to the liquid cooling socket and the direct current plug is connected to the direct current socket, the connection confirm circuit and a connection confirm circuit of the electric vehicle form a current loop by using the connection confirm plug and the connection confirm socket, and the charging pile is configured to detect a voltage at a detection point in the connection confirm circuit, to determine a status of connection between the direct current plug and the direct current socket; and
in response to the voltage at the detection point reaching a preset value, the charging pile determines that the direct current plug is successfully connected to the direct current socket.

32. The charging pile according to claim 30 or 31, wherein the charging pile is configured to receive a packet indicating that the liquid cooling socket is successfully connected to the liquid cooling plug.

33. The charging pile according to any one of claims 30 to 32, wherein the connection confirm plug comprises a first connection confirm plug, a second connection confirm plug, and a third connection confirm plug, the connection confirm circuit comprises a first connection confirm circuit, a second connection confirm circuit, and a third connection confirm circuit, and the first connection confirm plug, the second connection confirm plug, and the third connection confirm plug are respectively connected to the first connection confirm circuit, the second connection confirm circuit, and the third connection confirm circuit;
the first connection confirm circuit comprises a fourth resistor unit, and the first connection confirm plug is connected to a device ground platform of the charging pile through the fourth resistor unit;
the second connection confirm circuit comprises a fifth resistor unit, the second connection confirm plug is connected to a voltage source through the fifth resistor unit, and the detection point is located between the fifth resistor unit and the second connection confirm plug; and
the third connection confirm circuit comprises a sixth resistor unit, and the third connection confirm plug is connected to the device ground platform through the sixth resistor unit;

34. The charging pile according to claim 33, wherein the charging pile is configured to determine the status of connection between the direct current plug and the direct current socket based on a voltage at a detection point between the fifth resistor unit and the second connection confirm plug; and
in response to the voltage at the detection point between the fifth resistor unit and the second connection confirm plug reaching a pile-end preset value, the charging pile determines that the direct current plug is successfully connected to the direct current socket.

35. The charging pile according to claim 33 or 34, wherein the second connection confirm circuit further comprises a normally closed switch, and the normally closed switch is located between the fifth resistor unit and the second connection confirm plug.

36. The charging pile according to claim 35, wherein the detection point comprises a detection point located between the fifth resistor unit and the normally closed switch and a detection point located between the normally closed switch and the second connection confirm plug.

37. The charging pile according to claim 35 or 36, wherein the charging pile is configured to determine the status of connection between the direct current plug and the direct current socket based on a voltage at the detection point between the fifth resistor unit and the normally closed switch and a voltage between the normally closed switch and the second connection confirm plug; and
in response to the voltage at the detection point between the fifth resistor unit and the normally closed switch and the voltage at the detection point between the normally closed switch and the second connection confirm plug reaching the pile-end preset value, the charging pile is configured to determine that the direct current plug is successfully connected to the direct current socket.
